# EUROPEAN PATENT SPECIFICATION

(11) **EP 3 007 391 B1**
(45) Date of publication and mention of the grant of the patent: **26.06.2019**
(21) Application number: 14804374.8
(22) Date of filing: 22.05.2014
(51) Int. Cl.: H04L 12/775, H04L 12/717, H04L 12/64, H04L 12/24, H04L 29/08

(54) **NETWORK CONTROL DEVICE, NETWORK CONTROL METHOD, PROGRAM, AND COMMUNICATION SYSTEM**
NETZWERKSTEUERUNGSVORRICHTUNG, NETZWERKSTEUERUNGSVERFAHREN, PROGRAMM UND KOMMUNIKATIONSSYSTEM
DISPOSITIF DE COMMANDE DE RÉSEAU, PROCÉDÉ DE COMMANDE DE RÉSEAU, PROGRAMME ASSOCIÉ ET SYSTÈME DE COMMUNICATION

(30) Priority: 27.05.2013 JP 2013110934
(43) Date of publication of application: 13.04.2016
(73) Proprietor: NEC Corporation, Tokyo 108-8001 (JP)
(72) Inventor: SHINOHARA, Yusuke, Tokyo 108-8001 (JP)
(74) Representative: Robson, Aidan John
(86) International application number: PCT/JP2014/002685
(87) International publication number: WO 2014/192259

(56) References cited:
- WO-A1-2007/064059
- WO-A1-2011/068091
- WO-A1-2012/093472
- WO-A1-2012/176278
- DE-A1-102005 027 084
- JP-A- 2013 003 816
- JP-A- 2013 046 298
- JP-A- 2013 507 044
- US-A1- 2008 056 120
- US-A1- 2009 007 153
- PURNAPRAJNA ET AL: "Genetic algorithms for hardware-software partitioning and optimal resource allocation", JOURNAL OF SYSTEMS ARCHITECTURE, ELSEVIER BV, NL, vol. 53, no. 7, 16 May 2007 (2007-05-16), pages 339-354, XP022081366, ISSN: 1383-7621, DOI: 10.1016/J.SYSARC.2006.10.012

## Description

### Technical Field

The present invention relates to a virtualization technology of network functions in a communication system.

### Background Art

In current communication systems, to execute various network functions, a dedicated appliance, which is hardware equipment, is used for each network function. Since such dedicated appliances are needed to build a communication system, a network operator is forced to introduce a new dedicated appliance or appliances when it newly launches a network service. To introduce dedicated appliances, network operators pay a lot of costs for the dedicated appliances, such as purchase expenses, installation spaces and the like.

Moreover, in recent years, the life cycles of dedicated appliances are becoming shorter. Accordingly, network operators have the problem that the lifecycles of appliances come to an end without the network operators gaining sufficient profits from the introduced dedicated appliances.

A technique of constructing the function of a dedicated appliance by using software becomes a possible solution to the above-described problems.

Japanese Patent Application Unexamined Publication No. 2011-34403 discloses an example of virtualization technology. In this virtualization technique, a virtualization device initiates a virtual machine on a computer resource, and user equipment receives services from this virtual machine.

WO2009/098909 discloses a technique of constructing a virtual appliance that has the function of a hardware apparatus used for information services.

According to the techniques disclosed in JP2011-34403 and WO2009/098909, a web server, an application server or the like that is deployed at a communication endpoint (i.e., a starting point or terminating point of a communication) is constructed by using virtualization technology. However, neither JP2011-34403 nor WO2009/098909 discloses any technique of controlling communication paths over a network between endpoints.

On the other hand, many of dedicated appliances in a communication system are deployed on communication paths in a network, and it is therefore conceivable that virtual appliances are also deployed similarly on communication paths in a network. Accordingly, there is a possibility that virtual appliances are not efficiently used unless communication paths in a network are controlled depending on the deployment of the virtual appliances.

As mentioned above, since neither JP2011-34403 nor WO2009/098909 discloses any technique of controlling communication paths, it is difficult to realize the efficient use of virtual appliances that correspond to dedicated appliances in a communication system, based on the techniques of JP2011-34403 and WO2009/098909.

We have appreciated that it would be desirable to construct a dedicated appliance in a communications network by using software and to realize the efficient use of the constructed virtual appliance.

### SUMMARY OF INVENTION

In accordance with one aspect of the invention there is provided a network control apparatus (1) for controlling a communication network which includes information processing resources (14) and network resources (13), by comprising: first means (12) for deploying a virtual appliance in an information processing resource, wherein the virtual appliance is used to execute a function of a corresponding to a dedicated appliance; and second means (12) for instructing a network resource to identify communication data to be processed by the virtual appliance and to transfer the identified communication data to the information processing resource in which the virtual appliance is deployed.

In accordance with another aspect of the invention there is provided a network control method for controlling a communication network which includes information processing resources and network resources, comprising: deploying a virtual appliance in an information processing resource, wherein the virtual appliance is used to execute a function of a corresponding dedicated appliance; and instructing a network resource to identify communication data to be processed by the virtual appliance, and instructing the network resource to transfer the identified communication data to the information processing resource in which the virtual appliance is deployed.

In accordance with another aspect of the invention there is provided a program causing a network control apparatus for controlling a communication network which includes information processing resources and network resources, to execute the processing of: deploying a virtual appliance in an information processing resource, wherein the virtual appliance is used to execute a function of a corresponding dedicated appliance; and instructing a network resource to identify communication data to be processed by the virtual appliance and to transfer the identified communication data to the information processing resource in which the virtual appliance is deployed.

In accordance with a further aspect of the invention there is provided a communication system, comprising: a data transfer apparatus that transfers communication data; an information processing apparatus in which a virtual appliance is deployed that is capable of executing a function of a gateway apparatus relaying communications between communication networks; and a control apparatus that instructs the data transfer apparatus to transfer communication data to be processed by the virtual appliance to the information processing apparatus.

### BRIEF DESCRIPTION OF DRAWINGS

FIG. 1 is a schematic block diagram showing an example of a network control apparatus according to a first exemplary embodiment of the present invention.
FIG. 2 is a schematic diagram for describing an example of operations of the network control apparatus according to the first exemplary embodiment.
FIG. 3 is a sequence diagram showing an example of operations of the network control apparatus according to the first exemplary embodiment.
FIG. 4 is a schematic diagram for describing an example of operations in a communication system according to a second exemplary embodiment of the present invention.
FIG. 5 is a block diagram showing an example of a network control apparatus according to a third exemplary embodiment of the present invention.
FIG. 6 is a functional block diagram showing an example of a SW repository in the third exemplary embodiment.
FIG. 7 is a sequence diagram showing an example of operations of the network control apparatus according to the third exemplary embodiment.
FIG. 8 is a block diagram showing a schematic architecture of a communication system according to the third exemplary embodiment.
FIG. 9 is a schematic diagram for describing an example of operations in the communication system according to the third exemplary embodiment.
FIG. 10 is a schematic diagram showing an example of the communication system according to the third exemplary embodiment.
FIG. 11 is a format diagram schematically showing the structure of entries stored in a flow table in FIG. 10.
FIG. 12 is a sequence diagram showing an example of operations of a network control apparatus according to a fourth exemplary embodiment of the present invention.
FIG. 13 is a system configuration diagram showing an example of a communication system according a fifth exemplary embodiment of the present invention.
FIG. 14 is a schematic diagram showing an example of an information processing resource in the fifth exemplary embodiment.
FIG. 15 is a sequence diagram showing an example of operations in the communication system according to the fifth exemplary embodiment.
FIG. 16 is a schematic diagram for describing an example of operations in the communication system according to the fifth exemplary embodiment.
FIG. 17 is a schematic diagram for describing an example of operations in the communication system according to the fifth exemplary embodiment.
FIG. 18 is a system configuration diagram showing an example of a communication system according to a sixth exemplary embodiment of the present invention.
FIG. 19 is a block diagram showing an example of a network control apparatus according to the sixth exemplary embodiment.
FIG. 20 is a system configuration diagram for describing an example of operations in the communication system according to the sixth exemplary embodiment.
FIG. 21 is a block diagram showing an example of an optical communication node in the sixth exemplary embodiment.
FIG. 22 is a network layout diagram showing an example of a communication system according to a seventh exemplary embodiment of the present invention.
FIG. 23 is a network layout diagram showing another example of the communication system according to the seventh exemplary embodiment.
FIG. 24 is a schematic diagram showing an example of a routing table in the seventh exemplary embodiment.
FIG. 25 is a schematic diagram showing another example of the routing table in the seventh exemplary embodiment.
FIG. 26 is a schematic network layout diagram for describing a first example of operations in the communication system according to the seventh exemplary embodiment.
FIG. 27 is a schematic network layout diagram for describing a second example of operations in the communication system according to the seventh exemplary embodiment.
FIG. 28 is a sequence diagram showing an example of operations in the communication system according to the seventh exemplary embodiment.
FIG. 29 is a sequence diagram showing an example of operations in the communication system according to the seventh exemplary embodiment.
FIG. 30 is a system configuration diagram showing an example of a communication system according to an eighth exemplary embodiment of the present invention.
FIG. 31 is a system configuration diagram showing another example of the communication system according to the eighth exemplary embodiment.

### DESCRIPTION OF EMBODIMENTS

Hereinafter, exemplary embodiments of the present invention will be described with reference to drawings. In the drawings, the same or corresponding elements are given the same reference numerals or signs. Overlapping description concerning the same or corresponding elements will be omitted as necessary.

Description of the exemplary embodiments below will not limit the scope of the present invention but is intended to facilitate the understanding of the present invention. That is, those ordinarily skilled in the art can apply a principle or an idea that can be derived from the exemplary embodiments below to various modes.

First, a basic concept of the present invention will be described. The present invention provides a network control apparatus that is capable of constructing the functions of dedicated appliances in a communication system by using virtualization technology. The network control apparatus can control communication paths in a network in response to the construction of virtual appliances (software) corresponding to dedicated appliances. For example, it is possible for the network control apparatus to control a communication path in a network in response to the construction of a virtual appliance so that communication data will be transferred via this virtual appliance.

The network control apparatus of the present invention is capable of path control in response to the construction of a virtual compliance to efficiently use this virtual appliance. The use of the network control apparatus of the present invention enables communication system operators to use general-purpose equipment (e.g., standard server and networking device, etc.) to construct network functions, which have hitherto been executed by dedicated appliances. Accordingly, the communication system operators can greatly reduce the costs required to newly launch a network service.

### 1. First exemplary embodiment

### 1.1) Configuration

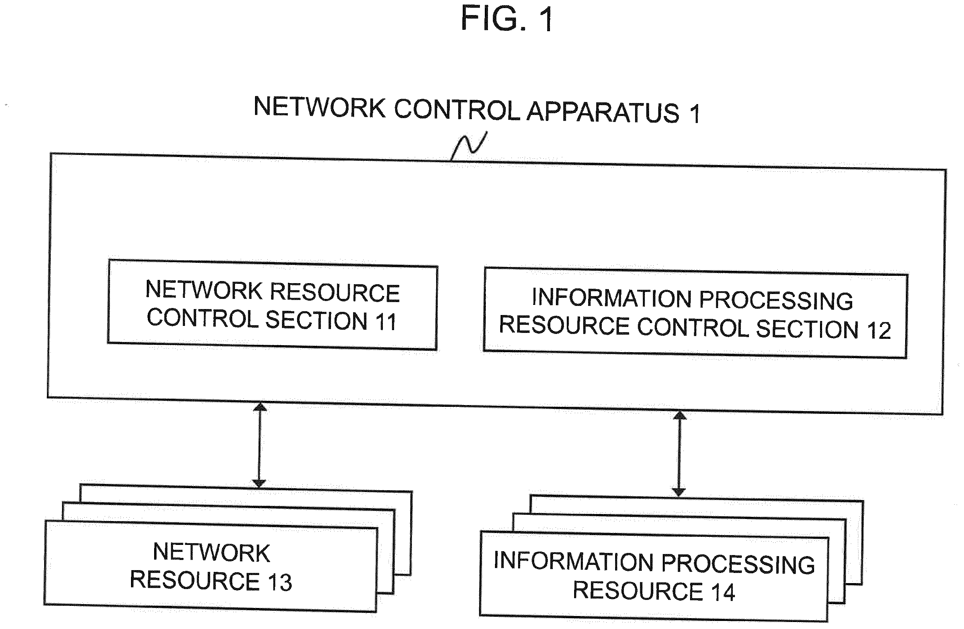

FIG. 1 shows an example of the configuration of a network control apparatus 1 according to a first exemplary embodiment. The network control apparatus 1 can use, for example, a network resource 13 and an information processing resource 14 to virtually construct a function executed by a dedicated appliance. The network resource 13 and the information processing resource 14 are, for example, standard general-purpose equipment. Network resources 13 and information processing resources 14 are resource pools accommodating, for example, general-purpose processors, general-purpose servers, general-purpose network switches, storage devices, general-purpose routers, and the like.

It is also possible that the network resource 13 and the information processing resource 14 are configured with software, not with hardware equipment. For example, the network resource 13 may be a virtual switch configured by software. Moreover, the information processing resource 14 may be, for example, a virtual machine.

The network control apparatus 1 includes a network resource control section 11 and an information processing resource control section 12. Note that each function of the network control apparatus 1 can be configured with either hardware or software programs.

It is also possible that the network resource control section 11 and the information processing resource control section 12 are implemented on different apparatuses, respectively. In this case, the network control apparatus 1 is divided into an apparatus controlling the network resources 13 and an apparatus controlling the information processing resources 14.

The information processing resource control section 12 deploys software for executing a network function corresponding to a dedicated appliance in an information processing resource 14. Note that the meaning of the term "deploy" in the present description includes installing software into an information processing resource 14. Network functions are, for example, functions corresponding to various dedicated appliances in a mobile network. Dedicated appliances in a mobile network include, for example, MME (Mobility Management Entity), S-GW (Serving-Gateway), P-GW (Packet Data Network-Gateway), large-scale NAT (LSN: Large Scale Network Address Translation), RNC (Radio Network Controller), eNodeB, and the like.

Moreover, BRAS (Broadband Remote Access Server), CDN Server (Contents Delivery Network Server), SBC (Session Border Controller), and the like are also among dedicated appliances corresponding to network functions in the present invention.

However, these appliances are shown as examples, and the present invention is not limited to the above-mentioned appliances.

The network resource control section 11 controls network resources 13, thereby controlling a communication path so as to use software deployed in an information processing resource 14. For example, the network resource control section 11 instructs the network resources 13 to perform operations determined by the network resource control section 11, thereby controlling the communication path.

### 1.2) Operations

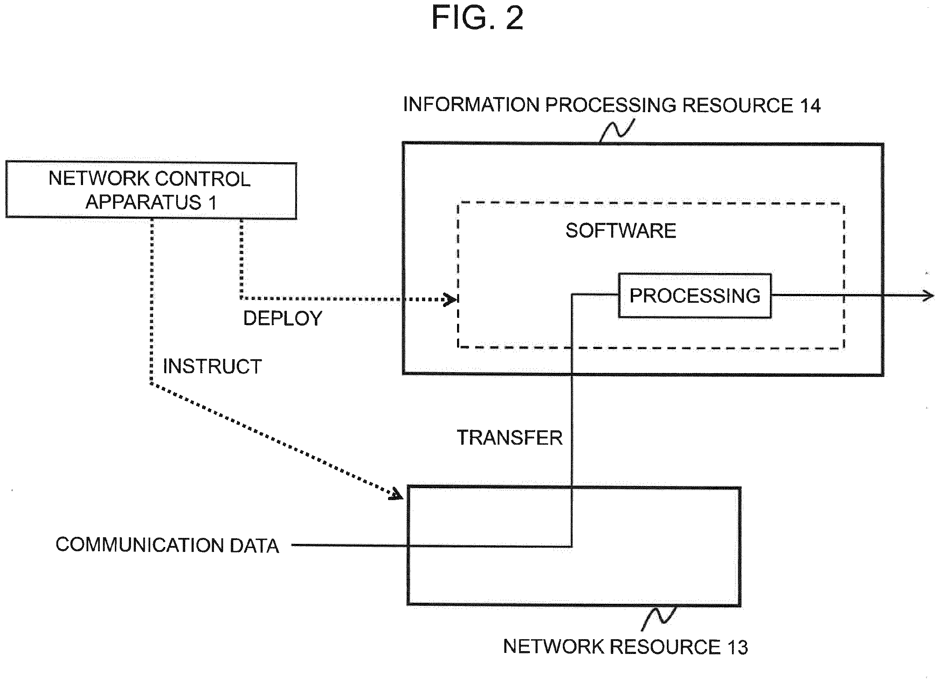

An example of operations of the network control apparatus 1 will be described with reference to FIG. 2. Note that FIG. 2 shows an example, and the present invention is not limited to the example shown in FIG. 2.

The information processing resource control section 12 deploys software that can execute the function of a dedicated appliance in an information processing resource 14. Note that software will be referred to as "virtual appliance" in some cases in the present description.

The network resource control section 11, in response to the deployment of the software, instructs a network resource 13 to identify communication data to be processed by the deployed software and transfer the identified communication data to the information processing resource 14. The network resource 13, in accordance with the instruction from the network resource control section 11, decides on whether or not received communication data is data to be processed by the software deployed in the information processing resource 14. For example, the network resource 13 refers to information included in communication data to identify the communication data. The communication data is processed by the software deployed in the information processing resource 14 and is transferred to the network.

It is conceivable that various types of virtual appliances are constructed on a communication network by the network control apparatus 1. The network resource 13 identifies communication data in accordance with instructions of the control section 11, whereby communication data is transferred to a virtual appliance that should process this communication data even if various types of virtual appliances have been constructed. For example, communication data to be processed by BRAS is transferred to a virtual appliance corresponding to BRAS, and communication data to be processed by P-GW is transferred to a virtual appliance corresponding to P-GW. Accordingly, each virtual appliance can avoid pressure on its communication band and the like, which is caused by receiving communication data that is not to be processed.

For example, the network resource control section 11 determines an identification criterion for identifying communication data to be processed by the software deployed in the information processing resource 14. For example, the network resource control section 11 determines an identification criterion based on the functional type of the dedicated appliance (i.e., the type of the function executed by the software). An identification criterion is determined based on the functional type, whereby the network resource control section 11 can perform path control adequate to the functional type of the dedicated appliance. The network resource 13 identifies communication data in accordance with the identification criterion notified and transfers the communication data that meets the criterion to the information processing resource 14.

The network resource control section 11, for example, transfers communication data that is not to be processed by the deployed software to another network resource 13, without transferring it to the information processing resource 14 in which the software is deployed.

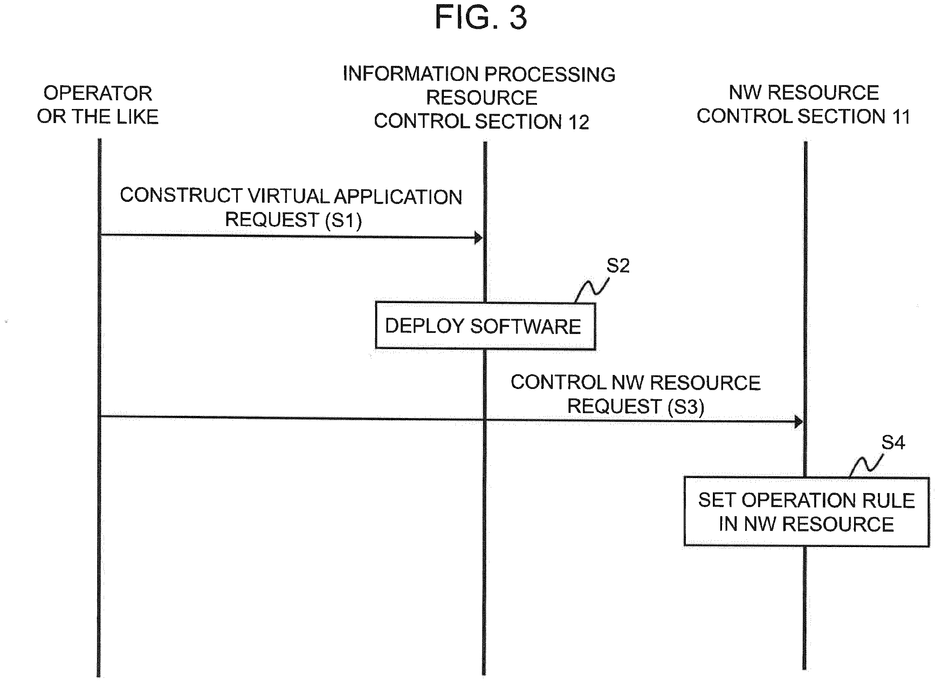

FIG. 3 is a sequence diagram showing an example of operations in the first exemplary embodiment. The sequence diagram of FIG. 3 shows an example, and operations in the present invention are not limited to the sequence diagram of FIG. 3.

For example, when a communication system operator sets up a virtual appliance having a network function corresponding to a dedicated appliance, the operator makes a request to the information processing resource control section 12 to construct the virtual appliance (Operation S1). Note that the information processing resource control section 12 may autonomously construct a virtual appliance, not at the instruction from the operator.

The information processing resource control section 12 deploys software that can execute the network function of the dedicated appliance in an information processing resource 14 (Operation S2).

Further, the operator makes a request to the network resource control section 11 to control a network resource 13 (Operation S3). Note that the network resource control section 11 may autonomously control a network resource 13, not at the instruction from the operator.

The network resource control section 11 notifies an operation rule to the network resource 13 (Operation S4). The operation rule includes an identification criterion as described above. For example, the operation rule is set in the network resource 13, which the operation rule instructs to identify communication data to be processed by the deployed software and to transfer the identified communication data to the information processing resource 14 in which the software is deployed.

### 1.3) Effects

The network control apparatus 1 according to the first exemplary embodiment, in response to the deployment of a virtual appliance, can perform path control to efficiently use the virtual appliance. The use of the network control apparatus according to the present exemplary embodiment enables communication system operators to use general-purpose equipment to construct network functions, which have hitherto been executed by dedicated appliances. Accordingly, communication system operators can greatly reduce the costs required to newly launch a network service.

### 2. Second exemplary embodiment

The network resource control section 11 of a network control apparatus according to a second exemplary embodiment of the present invention can instruct a network resource 13 to select a communication data transfer destination among a plurality of information processing resources 14. For example, if the same type of software is deployed in a plurality of information processing resources 14, the network resource control section 11 can change information processing resources 14 to be a transfer destination, depending on communication data. Accordingly, the network resource control section 11 can perform various controls to efficiently use virtual appliances constructed with software, such as, for example, load balancing among information processing resources 14.

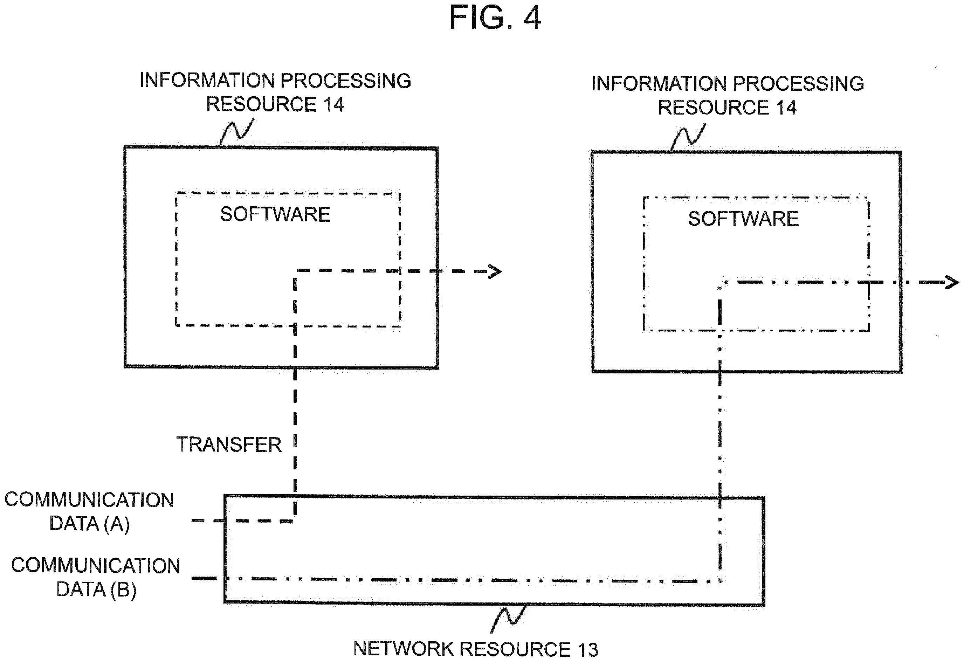

FIG. 4 shows an example of operations in the second exemplary embodiment. The operations shown in FIG. 4 are an example, and the present invention is not limited to FIG. 4. It is assumed that the information processing resource control section 12 deploys software that can execute the function of a dedicated appliance in each of a plurality of information processing resources 14. For example, the software in each one has the same function.

Moreover, it is assumed that the network resource control section 11 notifies a network resource 13 of a selection criterion for selecting a communication data transfer destination among the information processing resources 14. For example, the network resource control section 11 determines a selection criterion for selecting a communication data transfer destination among the plurality of information processing resources 14 in which the software is deployed, and notifies it to the network resource 13.

More specifically, the network resource control section 11 can determine a selection criterion such that the loads on the plurality of information processing resources 14 will be balanced. Moreover, it is also possible that the network resource control section 11 determines a selection criterion, based on QoS information associated with communication data, such that communication data requiring high quality will be transferred to an information processing resource 14 which is lightly loaded. Note that the above-described methods for determining a criterion are shown as examples, and the present invention is not limited to these methods for determining a criterion.

### 3. Third exemplary embodiment

Hereinafter, differences of a third exemplary embodiment of the present invention from the other exemplary embodiments will mainly be described, and description already given in the other exemplary embodiments will be omitted.

### 3.1) Configuration

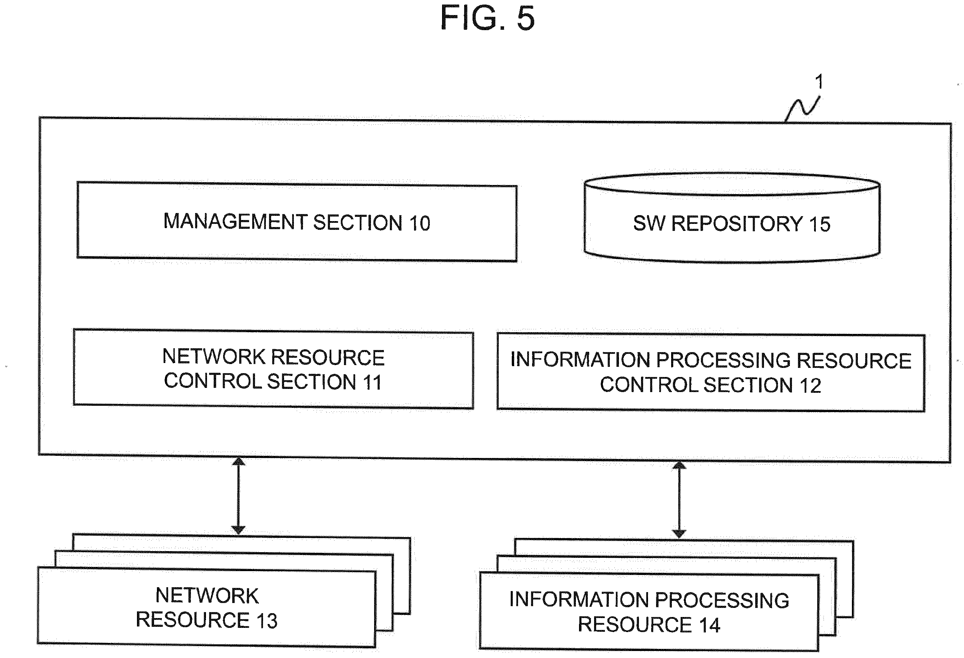

As illustrated in FIG. 5, a network control apparatus 1 according to the third exemplary embodiment includes a management section 10 and a SW (software) repository 15. However, FIG. 5 shows an example, and the network control apparatus 1 of the present invention is not limited to the configuration example of FIG. 5.

The management section 10 secures a network resource 13 and an information processing resource 14 that are required to construct a network function corresponding to a dedicated appliance. For example, the management section 10 calculates the required resource amounts of a network resource 13 and an information processing resource 14, based on a performance value required of the network function. The management section 10 allocates the calculated amounts of the resources to the network function. It is also possible that the management section 10 requests the network resource control section 11 and the information processing resource control section 12 to allocate a network resource 13 and an information processing resource 14, respectively.

The management section 10 manages information concerning network resources 13 and information processing resources 14 (e.g., the deployment states of information processing resources 14, topology information on network resources 13, and the like). The topology information on network resources 13 is, for example, the topology of a network composed of network resources 13. The management section 10 refers to this information and allocates resources to a network function to be virtually constructed (i.e., a virtual appliance).

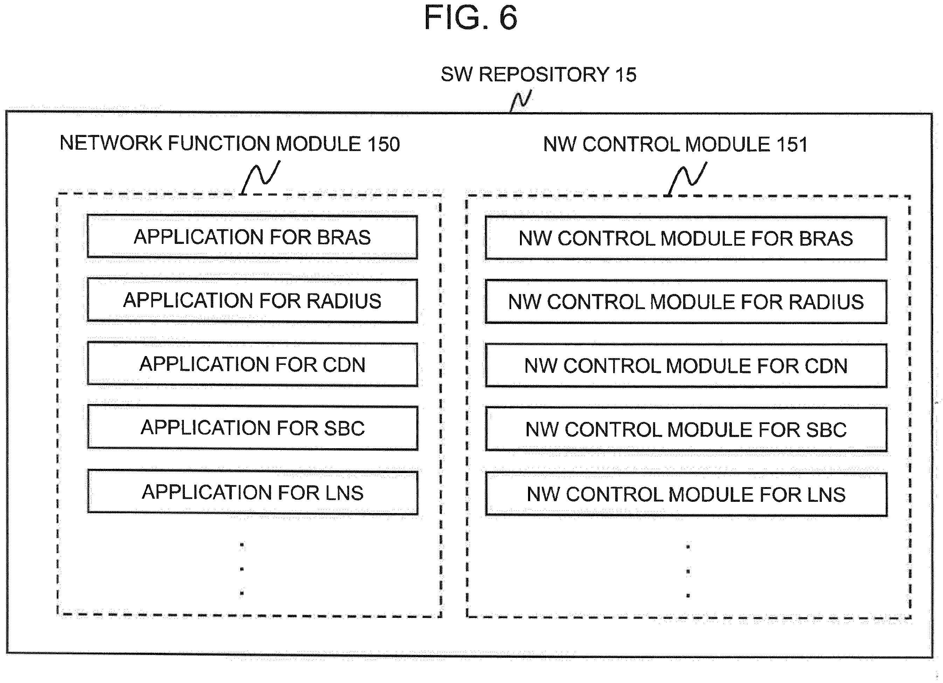

For example, when a communication system operator sets up a network function corresponding to a dedicated appliance, the information processing resource control section 12 selects a software application corresponding to this network function from the SW repository 15. The information processing resource control section 12 selects an application among network function modules 150 in the SW repository 15 structured as illustrated in FIG. 6. The information processing resource control section 12 installs the selected application in an information processing resource 14. For example, the information processing resource control section 12 initiates a virtual machine on an information processing resource 14 and installs the selected application in this virtual machine.

The network resource control section 11 selects a module for controlling a network resource 13 from the SW repository 15. For example, the network resource control section 11 selects a module corresponding to an application selected by the information processing resource control section 12 among NW control modules 151 in the SW repository 15 illustrated in FIG. 6. The selected NW control module 151 is a module to execute path control corresponding to the application selected by the information processing resource control section 12. For example, a NW control module 151 has a function to determine an operation rule to be notified to a network resource 13. Moreover, a NW control module 151 may have a function to determine an "identification criterion" and a "selection criterion" as described in the exemplary embodiments above. Note that such functions may vary depending on the network function of a dedicated appliance.

The network resource control section 11 controls the network resource 13 by using the selected NW control module 151.

It is also possible that the management section 10, not the network resource control section 11 and the information processing resource control section 12, selects a network function module 150 and a NW control module 151 from the SW repository 15 and sends the selected modules to the network resource control section 11 and the information processing resource control section 12.

The SW repository 15 illustrated in FIG. 6 includes network function modules 150 and NW control modules 151 correspond to individual network functions (e.g., "BRAS", "CDN" and the like). However, the SW repository 15 is not limited to the structure example of FIG. 6. For example, a NW control module 151 may be shared among a plurality of network function modules 150.

### 3.2) Operations

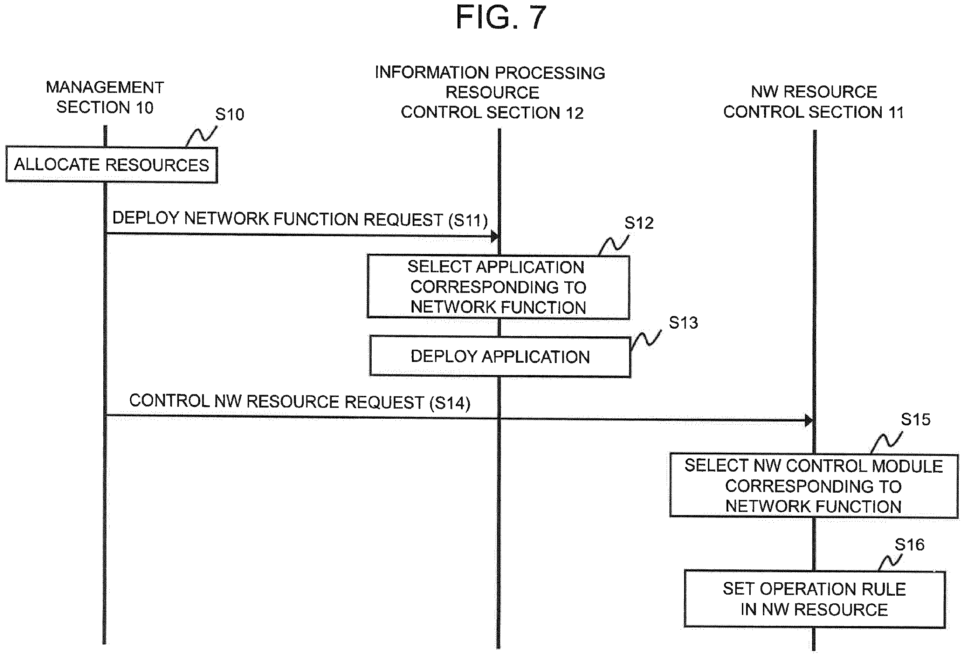

FIG. 7 is a sequence diagram showing an example of operations in the third exemplary embodiment. The sequence diagram of FIG. 7 is an example, and operations in the present invention are not limited to FIG. 7.

For example, when a communication system operator sets up a network function corresponding to a dedicated appliance, the management section 10 allocates a network resource 13 and an information processing resource 14 to this network function (Operation S10).

Note that the management section 10 may request the network resource control section 11 and the information processing resource control section 12 to allocate a network resource 13 and an information processing resource 14, respectively. In this case, the information processing resource control section 12 and the network resource control section 11, in response to the request, individually allocate resources to the network function.

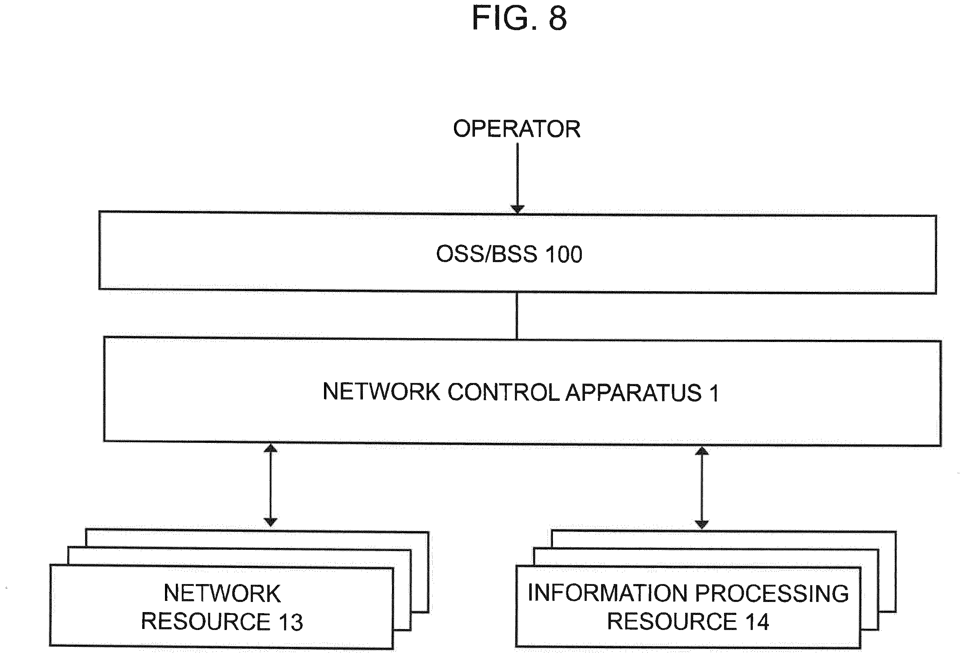

For example, the operator can input a parameter such as a target performance value of the newly set-up network function to the network control apparatus 1 through an OSS/BSS (Operation Support System/Business Support System) 100 illustrated in FIG. 8. The management section 10 can allocate a network resource 13 and an information processing resource 14, based on the parameter input from the OSS/BSS 100. For example, the management section 10 calculates such resource amounts of a network resource 13 and an information processing resource 14 that will fulfill the target performance value (e.g., computation throughput, communication bandwidth and the like) input by the operator.

Note that the management section 10 may request the network resource control section 11 and the information processing resource control section 12 to allocate a network resource 13 and an information processing resource 14, respectively. In this case, the information processing resource control section 12 and the network resource control section 11, in response to the request, individually allocate resources to the network function.

Subsequently, the management section 10 requests the information processing resource control section 12 to deploy software corresponding to the network function (Operation S11). For example, the management section 10 notifies the type of the network function to the information processing resource control section 12 and requests to deploy a module corresponding to this network function in the information processing resource 14.

The information processing resource control section 12 selects an application corresponding to the network function from the SW repository 15 (Operation S12). It is also possible that the management section 10, not the information processing control section 12, selects an application and notifies the selected application to the information processing resource control section 12.

Subsequently, the information processing resource control section 12 deploys the selected application in the information processing resource 14 (Operation S13).

Further, the management section 10 requests the network resource control section 11 to control the network resource 13 (Operation S14). For example, the management section 10 notifies the type of the network function to the network resource control section 11 and requests to select a module corresponding to this network function to control the network resource 13.

The network resource control section 11 selects a NW control module 151 corresponding to the network function from the SW repository 15 (Operation S15). In place of Operations S14 and S15, it is also possible that the management section 10 selects a NW control module 151 and notifies the selected module to the network resource control section 11. In this case, the management section 10 requests the network resource control section 11 to use the notified module to control the network resource 13.

The network resource control section 11 sets an operation rule in the network resource 13 by using the selected NW control module 151 (Operation S16).

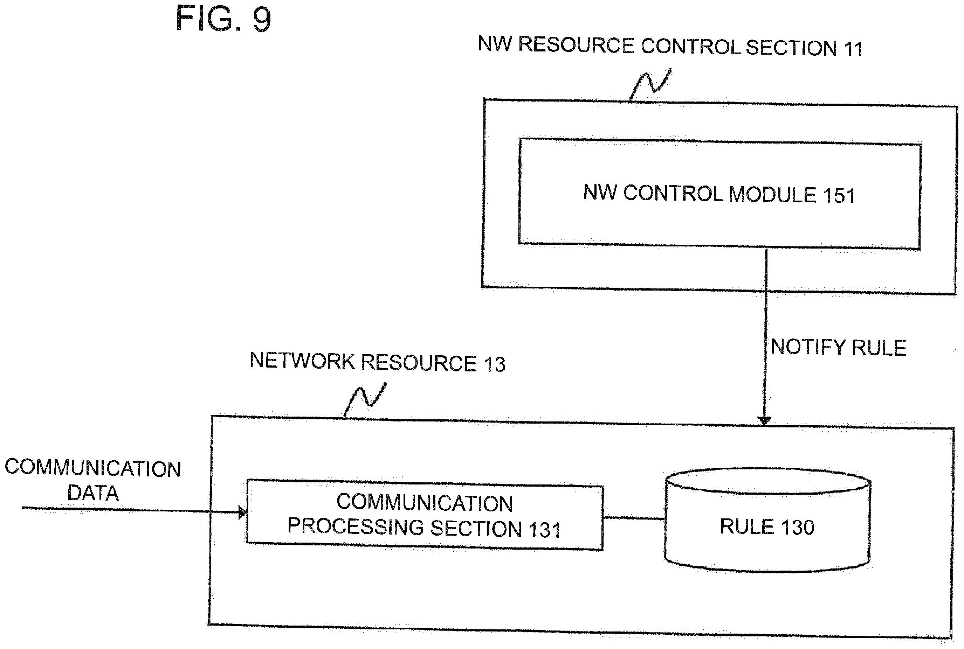

Next, with reference to FIGS. 9 to 11, operations for the network resource control section 11 to control a network resource 13 will be described. However, FIGS. 9 to 11 show examples, and operations for controlling a network resource 13 in the present invention are not limited to FIGS. 9 to 11. Moreover, the operations illustrated in FIGS. 9 to 11 can also be applied to the other exemplary embodiments (the first, second, and under-mentioned embodiments).

Referring to FIG. 9, a network resource 13 includes a rule DB (database) 130 and a communication processing section 131 and performs communication processing in accordance with a rule notified by the network resource control section 11.

The network resource control section 11 sets a rule for the network resource 13 to perform communication processing corresponding to a network function in the rule DB 130 of the network resource 13 through a NW control module 151. A NW control module 151, as described above, has a function to determine an operation rule to be notified to a network resource 13 and can have a function to determine an "identification criterion" and a "selection criterion" as described in the exemplary embodiments above. However, such functions may vary depending on the network function of a dedicated appliance. The network control apparatus 1 can virtually construct a network function executed by a dedicated appliance by means of the function of a NW control module 151 and the function of an application deployed in an information processing resource 14.

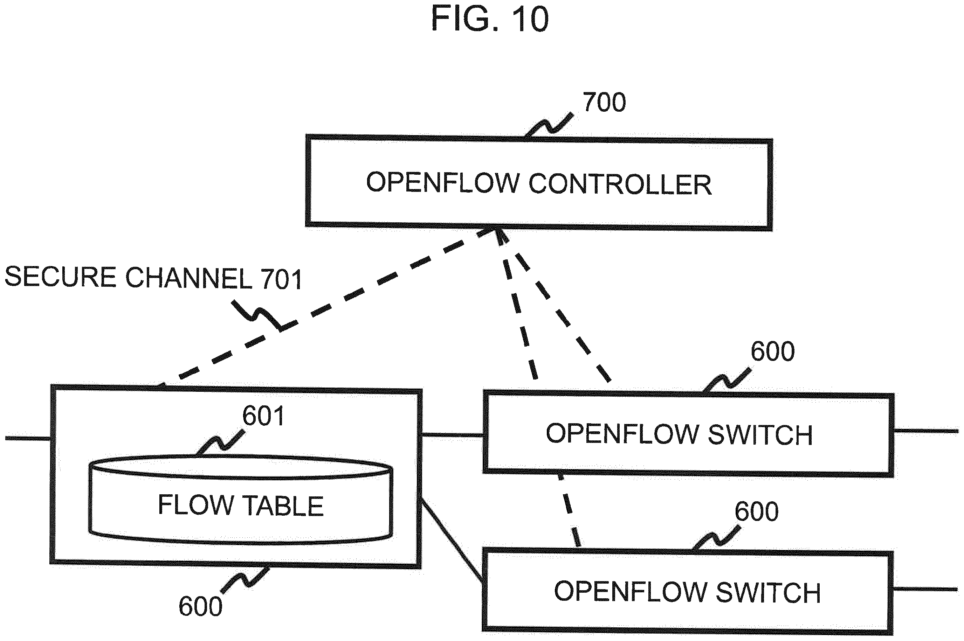

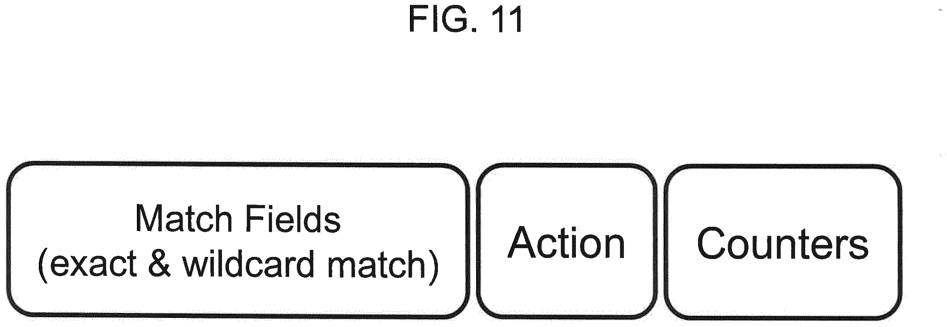

The communication processing section 131 refers to the rule DB 130 to process communication data. Hereinafter, an example using the OpenFlow technology will be described with reference to FIGS. 10 and 11.

OpenFlow is a technology in which a controller manages network equipment (switches and the like) in centralized manner and controls operations of the network equipment, and by which it is possible to recognize a communication as an end-to-end flow and to perform path control and the like in units of flows. The network resource control section 11 can also be implemented by modification and application of OpenFlow.

FIG. 10 shows an outline of a communication system structured based on OpenFlow. Note that a flow is, for example, a sequence of communication packets having a predetermined attribute (an attribute that is identified based on the destination and source of a communication or the like). OpenFlow switches 600 are network switches employing the OpenFlow technology. An OpenFlow controller 700 is an information processing device that controls the OpenFlow switches 600.

The OpenFlow switches 600 communicate with the OpenFlow controller via secure channels 701 configured between the OpenFlow switches 600 and the OpenFlow controller 700. The OpenFlow controller 700 sets a flow table 601 in each OpenFlow switch 600 via a secure channel 701. Note that the secure channels 701 are communication paths provided with measures for preventing eavesdropping, manipulation and the like of communications between the switches and the controller.

FIG. 11 shows an example of the structure of entries (flow entries) in the flow table 601. The flow entries include matching rules (Match Fields) for comparing with information included in a packet received by a switch (e.g., destination IP address, VLAN ID and the like), statistical information (Counters), which is statistical information on individual packet flows, and Actions, which define packet processing methods that match with the matching rules.

Each OpenFlow switch 600, when receiving a packet, refers to the flow table 601. The OpenFlow switch 600 searches for a flow entry that matches with information included in the received packet. When an entry that matches with the information included in the received packet is retrieved, the OpenFlow switch 600 processes the received packet in accordance with a processing method defined in the Action field of the retrieved entry. Processing defined as a processing method includes, for example, "transfer a received packet from a predetermined port", "discard a received packet", and "partially rewrite the header of a received packet and then transfer from a predetermined port".

On the other hand, for example, when an entry that matches with the header information of the received packet is not found, the OpenFlow switch 600, for example, transfers the received packet to the OpenFlow controller 700 via a secure channel 701. The OpenFlow switch 600 may also transfer the received packet to the OpenFlow controller 700 when an action "inquire of the controller" is provided in a flow entry that matches with the information included in the received packet. The OpenFlow switch 600 transfers the received packet, thereby requesting the controller to set a flow entry in which a method for processing the received packet is provided.

The OpenFlow controller 700 determines a method for processing the received packet and sets a flow entry including the determined processing method in the flow table 601. Thereafter, the OpenFlow switch 600, based on the set flow entry, processes subsequent packets that belong to the same flow as the received packet.

Improving and applying the above-described OpenFlow, a NW control module 151 can program operations of a network resource 13 to virtually construct the network function of a dedicated appliance.

### 3.3) Effects

When a virtual appliance is newly set up, in general, the network control apparatus 1 notifies a network resource 13 of an operation rule according to a control policy corresponding to this virtual appliance. Notification of an operation rule is almost synonymous with "programing" of operations of a network resource 13. Accordingly, it can be an excessive burden on an operator to generate a control policy for programing operations of a network resource 13 each time a virtual appliance is set up.

In contrast, according to the third exemplary embodiment of the present invention, the NW control modules 151 for generating operation rules to be notified to a network resource 13 are stored beforehand in the SW repository 15. The network control apparatus 1, when a new virtual appliance is set up, can select a NW control module 151 corresponding to this virtual appliance from the repository and use it. Accordingly, an operator can reduce the load of generating a control policy for programing a network resource 13 each time a new virtual appliance is set up, resulting in increased operating efficiency.

### 4. Fourth exemplary embodiment

According to a fourth exemplary embodiment of the present invention, a network control apparatus 1 monitors the states of operations in a communication network and makes an increase, a decrease or the like in resources depending on a result of the monitoring. With the network control apparatus 1 of the fourth exemplary embodiment, a communication system operator can have the system autonomously operate, resulting in increased operating efficiency of the operator is increased.

### 4.1) Configuration

The configuration of the network control apparatus 1 is similar to the other exemplary embodiments.

### 4.2) Operations

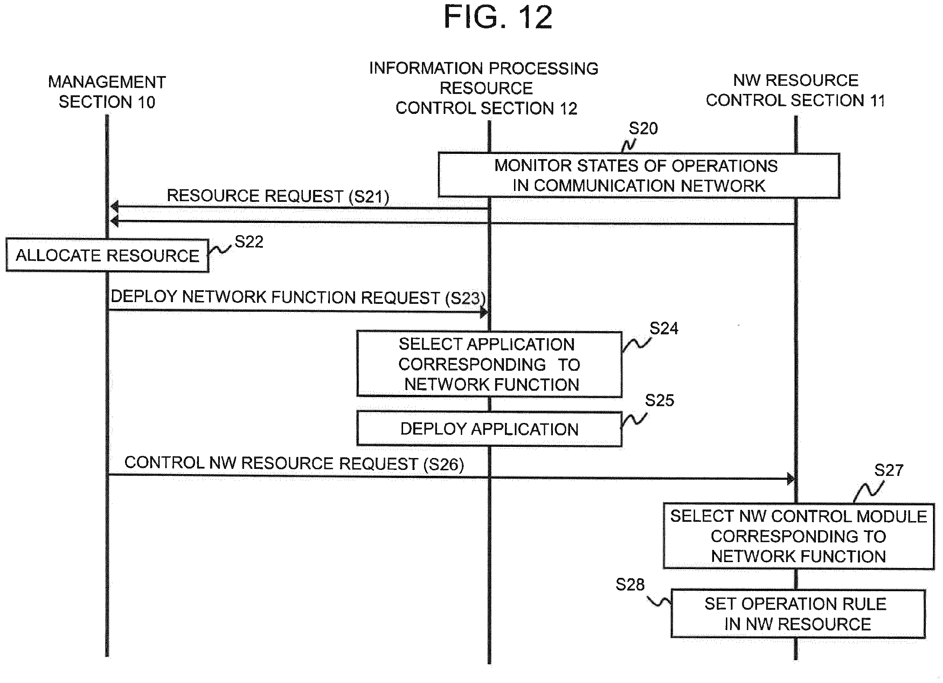

FIG. 12 is a sequence diagram showing an example of operations in the fourth exemplary embodiment. The sequence diagram of FIG. 12 shows an example, and operations in the present invention are not limited to the sequence diagram of FIG. 12.

The network control apparatus 1 according to the fourth exemplary embodiment monitors the states of operations in a communication network (Operation S20). For example, the network control apparatus 1 monitors the operating states of network resources 13 and information processing resources 14 that are virtually implementing network functions. It is also possible that the network resource control section 11 and the information processing resource control section 12 of the network control apparatus 1 monitor the operating states of the network resources 13 and the information processing resources 14, respectively.

As an example, the network resource control section 11 monitors statistical information (e.g., the number of sessions being processed by a virtual appliance, the number of packets being processed, the number of errors, the availability of a communication bandwidth, and the like) acquired by the network resources 13. For example, the network resource control section 11 periodically monitors statistical information of the network resources 13. Moreover, the network resource control section 11 may have the network resources 13 report statistical information.

In the above-mentioned OpenFlow technology, since a switch acquires statistical information ("Counters" in FIG. 11) in units of flows, it is also possible that the network resource control section 11 acquires statistical information by using the OpenFlow technology.

The information processing resource control section 12 may monitor the operating states of the information processing resources 14 by adding a function of acquiring statistical information of an information processing resource 14 to an application deployed in the information processing resource 14. Thus, the information processing resource control section 12 can monitor statistical information concerning the loaded states (the number of processes being processed, memory usage, communication load, and the like) of the information processing resources 14.

The network control apparatus 1 makes an increase, a decrease or the like in the resources, depending on a result of the above-described monitoring. For example, the network resource control section 11 or the information processing resource control section 12 requests the management section 10 to make an increase, a decrease or the like in the resource, depending on a result of the respective monitoring (Operation S21).

For example, when the throughput of a network resource 13 or an information processing resource 14 measured through monitoring is not larger than a predetermined threshold, the network control apparatus 1 requests to reinforce the resource. The threshold is set, for example, based on the target performance of a network function. Moreover, when the throughput is larger than the threshold by a predetermined value (i.e., when there is a margin for the target performance), the network control apparatus 1 may reduce the amount of the network resource 13 or the information processing resource 14.

For example, in a case where a plurality of types of network functions are virtually constructed in a communication system, the network control apparatus 1, for each of the plurality of types of network functions, monitors the operating states of network resources 13 and information processing resources 14. For example, the network control apparatus 1 performs resource control for each network function depending on results of the monitoring. Moreover, for example, when the throughput of a network function has decreased, it is also possible that the network control apparatus 1 supplies resources from another network function that has a margin of throughput.

The network control apparatus 1 may control a network resource 13 and an information processing resource 14 individually. For example, when the throughput of a function executed by an information processing resource 14 fulfills a required criterion but the communication bandwidth of a network resource 13 is insufficient, the network control apparatus 1 may reinforce only the network resource 13.

Operations S22 to S28 in FIG. 12 are similar to Operations S10 to S16 in FIG. 7 described in the third exemplary embodiment above, and therefore a detailed description thereof will be omitted.

In fifth to seventh exemplary embodiments below, examples will be described in which the network control apparatus 1 virtually constructs a network function. However, these exemplary embodiments are shown as examples, and the present invention is not limited to the exemplary embodiments described below.

### 5. Fifth exemplary embodiment

A fifth exemplary embodiment of the present invention relates to a function in an access network used for a user to access the Internet. The fifth exemplary embodiment particularly shows an example in which a network function provided by a dedicated appliance called BRAS (Broadband Remote Access Server) is virtually constructed.

### 5.1) Configuration

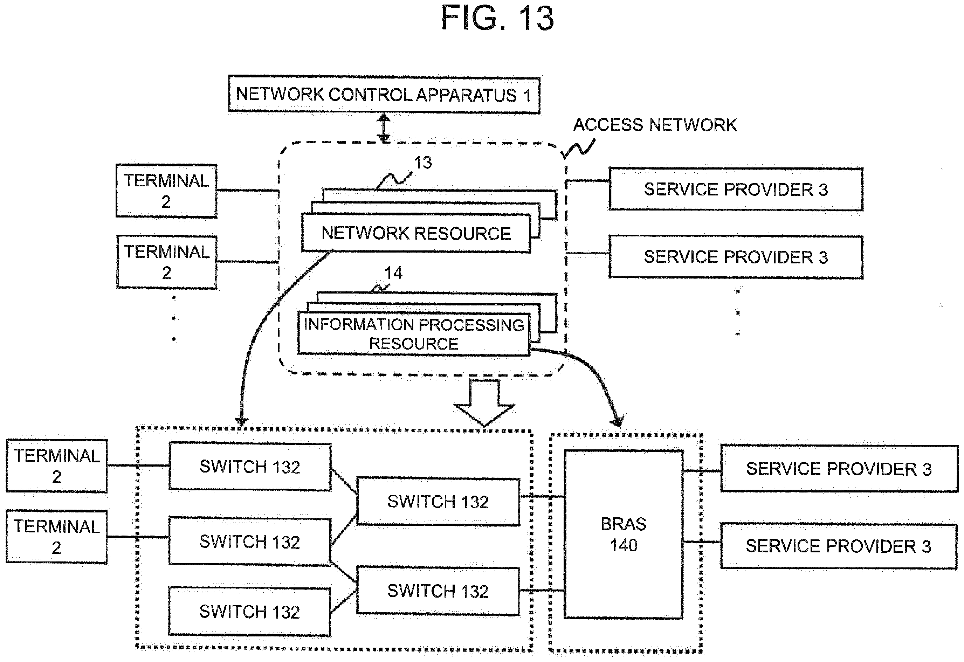

FIG. 13 shows an outline of the fifth exemplary embodiment. In the fifth exemplary embodiment, the network control apparatus 1 virtually constructs a network function provided by BRAS by using network resources 13 and an information processing resource 14.

Referring to FIG. 13, the network control apparatus 1 virtually constructs an access network including a BRAS 140 and switches 132.

The BRAS 140 has a function of achieving Internet access from a broadband access connection such as FTTH (Fiber To The Home). A user's terminal 2 communicates with the BRAS 140 via an access network including the switches 132. The terminal 2 accesses a service provider 3 via the BRAS 140 and receives a service from the Internet.

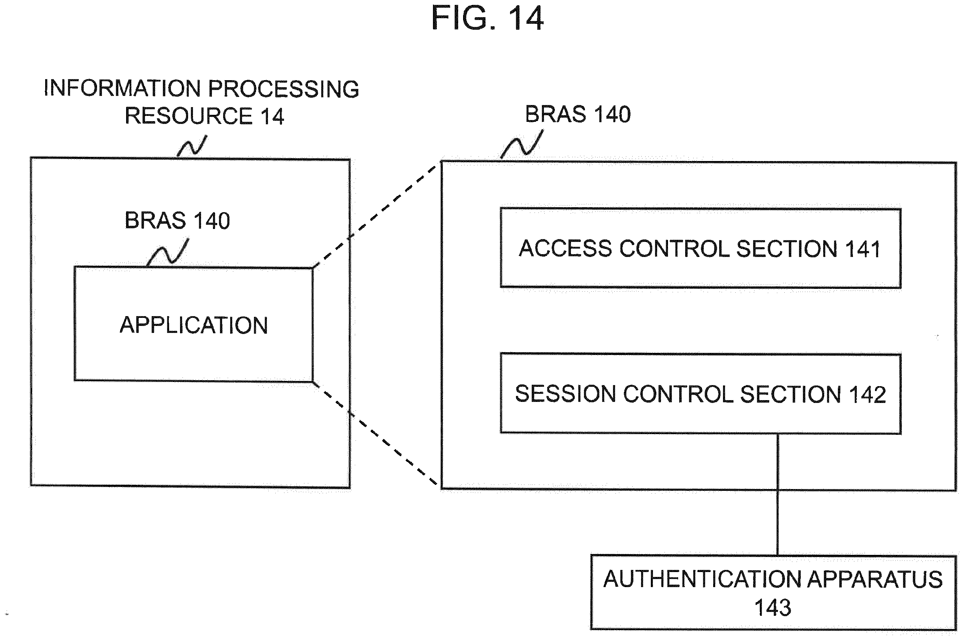

The information processing resource control section 12 of the network control apparatus 1 deploys an application having the function of BRAS in an information processing resource 14. FIG. 14 shows an example of the configuration of the BRAS 140 deployed as an application.

The BRAS 140 includes, for example, an access control section 141 and a session control section 142.

The session control section 142 establishes a session with the terminal 2 through PPPoE (Point To Point Protocol over Ethernet) (Ethernet is a trademark; the same will apply hereinafter.). The session control section 142 transfers a PPPoE packet received from the terminal 2 to an authentication apparatus 143 for authentication. The authentication apparatus 143, for example, has the function of RADIUS (Remote Authentication Dial-In User Service). It is also possible that the information processing resource control section 12 virtually constructs the authentication apparatus 143 by deploying an application having the function of authentication apparatus 143 in an information processing resource 14.

The access control section 141, for a session successfully authenticated, controls communication with the service provider 3. For example, the access control section 141 connects to a LNS (L2TP Network Server) (not shown) through L2TP (Layer2 Tunneling Protocol), thereby enabling the service provider 3 to provide a service to a user. It is also possible that the network control apparatus 1 virtually constructs the LNS.

The network resource control section 11 of the network control apparatus 1 controls network resources 13 so that a function corresponding to the BRAS 140 is provded. For example, the network resource control section 11 controls the network resources 13 by using the OpenFlow technology illustrated in FIGS. 9 to 11. For example, the network resource control section 11 selects a NW control module for BRAS from the SW repository 15 and, through this module, controls the network resources 13 so that operations corresponding to BRAS are performed. 5.2) Operations

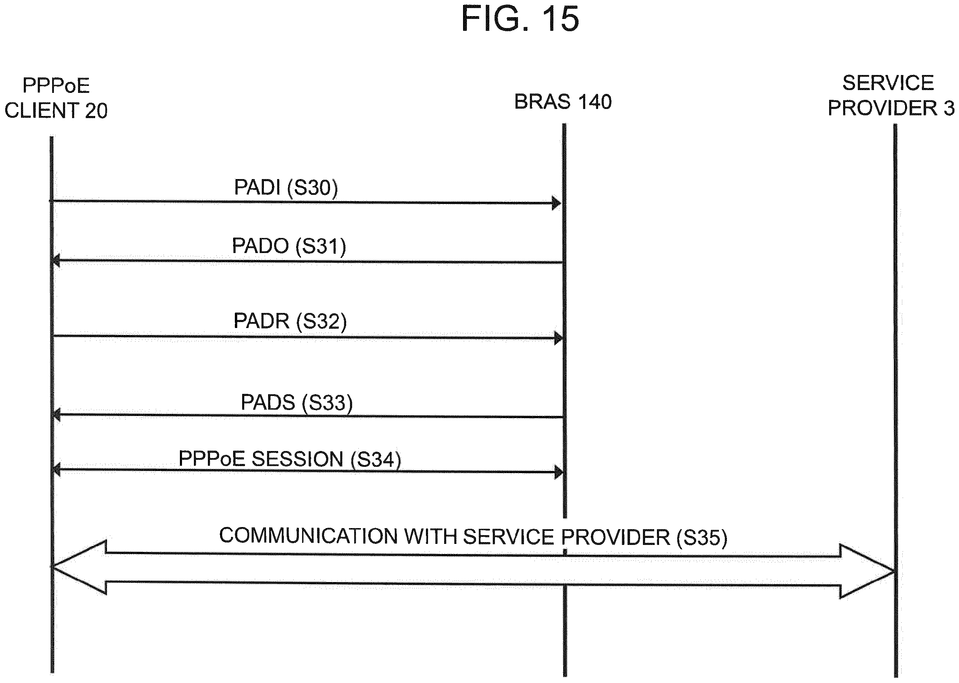

FIG. 15 shows an example of operations for the BRAS 140 to establish a PPPoE session.

A PPPoE client 20 in a user's premise where a terminal 2 is deployed sends PADI (PPPoE Active Discovery Initiation) as a broadcast packet to request session establishment (Operation S30). The PPPoE client 20 is connected to the terminal 2 and, in response to a request from the terminal 2 for access to the Internet, establishes a PPPoE session with the BRAS 140. Note that PADI is sent (broadcast) from the client 20 to non-specific destinations.

The BRAS 140, when receiving the PADI, sends PADO (PPPoE Active Discovery Offer) indicating that session establishment is possible to the client 20 that is the source of the PADI (Operation S31).

The client 20, when receiving the PADO, sends PADR (PPPoE Active Discovery Request) to the BRAS 140 to request session establishment with the BRAS 140 that has sent the PADO (Operation S32).

The BRAS 140, when receiving the PADR, sends PADS (PPPoE Active Discovery Session-Confirmation) to the client 20 to notify session establishment (Operation S33).

The BRAS 140 establishes a session through the above-described sequence (Operation S34). After a session has been established, communication is started between the terminal 2 and the service provider 3 (Operation S35).

For example, the network resource control section 11 notifies the network resources 13 of an operation rule to cause them to perform communication operations for establishing the above-described session. Hereinafter, an example of an operation rule will be described that is set in the network resources 13 by the network resource control section 11.

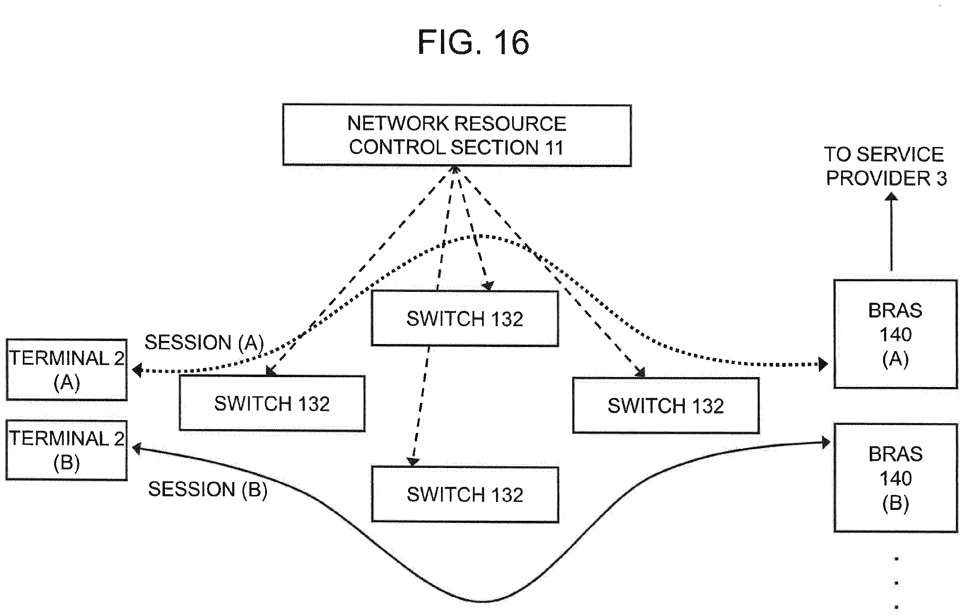

For example, the network resource control section 11, among a plurality of BRASs 140, selects a BRAS 140 to receive PADI, which is broadcast to non-specific destinations. For example, as shown in FIG. 16, the network resource control section 11 decides on a BRAS 140(A) as the destination of PADI sent from a terminal 2(A). Moreover, the network resource control section 11 decides on a BRAS 140(B) as the destination of PADI sent from a terminal 2(B).

In the above example, the network resource control section 11 selects a BRAS 140 to which a packet will be transferred, based on the address of a source terminal. For example, the network resource control section 11 selects a BRAS 140, based on the contract with each terminal 2 (for example, a user under contract with an option for being provided with high-quality communication, a user under contract with an option for lower quality and lower price, and the like). In this case, it is assumed that the network resource control section 11 can access a database that manages the contracts of users in association with user identifiers (e.g., the addresses of the users' terminals 2). If a communication is from a user under contract with an option for high-quality communication, the network resource control section 11 selects, for example, a lightly loaded BRAS 140 as the transfer destination.

It is also possible that the network resource control section 11 selects a BRAS 140 to which a packet will be transferred, based on the number of sessions being processed by each BRAS 140. For example, the network resource control section 11 monitors the number of sessions of each BRAS 140 and selects a BRAS 140 to be the packet transfer destination such that the numbers of sessions of the BRASs 140 will be leveled out. In this case, the network resource control section 11 identifies sessions based on the sources of packets and selects a transfer destination for each session such that the number of sessions to be processed by the BRASs 140 will be leveled out. There are some cases where a maximum number of manageable sessions is provided to a BRAS 140 depending on its throughput. The destination of a packet is determined based on the number of sessions being managed by each BRAS 140 as described above, whereby it is possible to achieve load balancing among the BRASs 140.

The network resource control section 11 determines a "selection criterion" as in the above-described example.

For example, the network resource control section 11 sets a rule "the destination of a PADI packet whose source is the terminal 2(A) is the BRAS 140(A)" in switches 132 along a path from the terminal 2(A) to the BRAS 140(A). The switches 132, in accordance with the rule, send out a PADI packet whose source is the terminal 2(A) from a port corresponding to the path toward the BRAS 140(A). Note that PPPoE-related packets include information indicating a packet type (PADI, PADO, PADR, PADS, or the like) within the packets. Accordingly, the switches 132 refer to this information and thereby can identify the type of a PPPoE packet.

The network resource control section 11 determines a criterion for identifying PPPoE-related packets as an "identification criterion", as in the above-described example.

The network resource control section 11 generates an operation rule to be notified to the network resources 13 based on the determined "identification criterion" and "selection criterion". For example, the network resource control section 11 sets an operation rule "the destination of a PADI packet whose source is the terminal 2(B) is the BRAS 140(B)" in switches 132 along a path from the terminal 2(B) to the BRAS 140(B).

For example, the network resource control section 11 sets rules similar to those of the above-described example in the network resources 13 with respect to other PPPoE packets (PADO, PADR, PADS, and the like) than PADI. For example, the network resource control section 11 sets a rule to transfer the other PPPoE packets through the same path as PADI packets in network resources 13 along each path.

Rules are set as in the above-described example, whereby the network resource control section 11 can cause the network resources 13 to perform communication operations for establishing a PPPoE session.

It is also possible that the network resource control section 11 sets rules in the network resources 13 such that communication paths for PPPoE session establishment (i.e., paths for PADI packets and the like to travel) will be separated from paths for data communication with providers after a session has been established. Setting of such rules makes it possible to prevent a bandwidth for data communication with providers from decreasing due to traffic for PPPoE session establishment.

A PPPoE packet includes information indicating the type of the PPPoE packet, as mentioned above. Accordingly, a network resource 13 refers to the information in a packet and thereby can discriminate between PPPoE packets and packets for data communication with providers. The network resource control section 11 determines paths for PPPoE session establishment and paths for communication data with providers. Then, the network resource control section 11 sets rules for establishing a PPPoE session in network resources 13 along the path for PPPoE and sets rules for transferring communication data in network resources 13 along the path for communication data with providers.

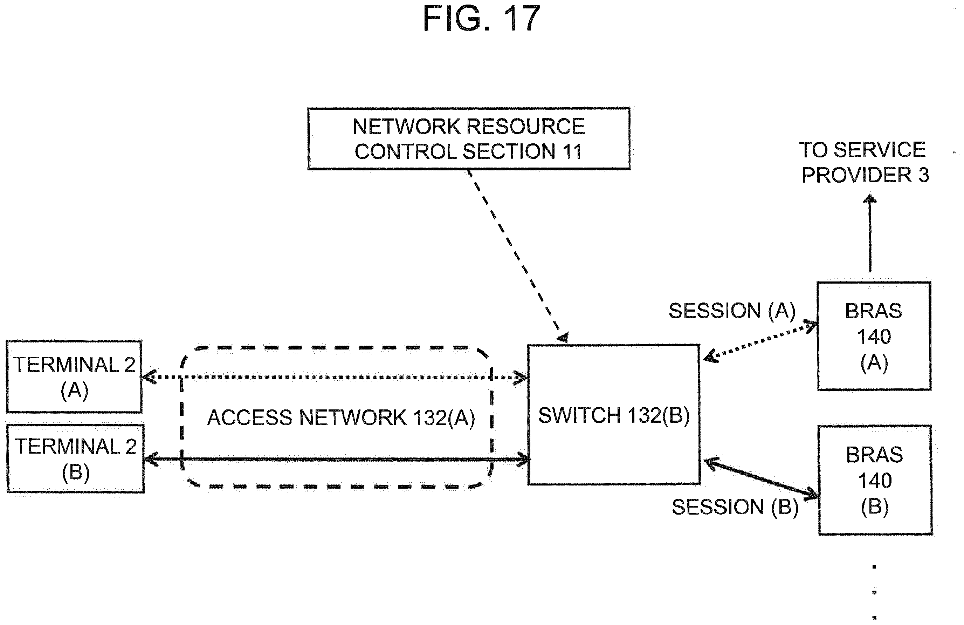

FIG. 17 shows another example of operations in the fifth exemplary embodiment.

The network resource control section 11 may notify operation rules only to a switch (switch 132(B)) deployed at an edge of an access network, as in the example of FIG. 17.

Such a configuration makes it possible to apply the technique of the present exemplary embodiment, almost without changing the existing network architecture of a BRAS network. An access network 132(A) is a network including L2 (Layer 2) switches of an existing BRAS network. In the access network 132(A), packets are transferred in accordance with the L2 protocol. The network resource control section 11 notifies operation rules to the switch 132(B) that is deployed at an edge of the access network and connected to BRASs 140.

### 6. Sixth exemplary embodiment

A sixth exemplary embodiment of the present invention relates to functions in a radio network used by mobile terminals and the like. The sixth exemplary embodiment particularly shows an example in which network functions provided by a radio base station (e.g., eNodeB or the like) are virtually constructed. 6.1) Configuration

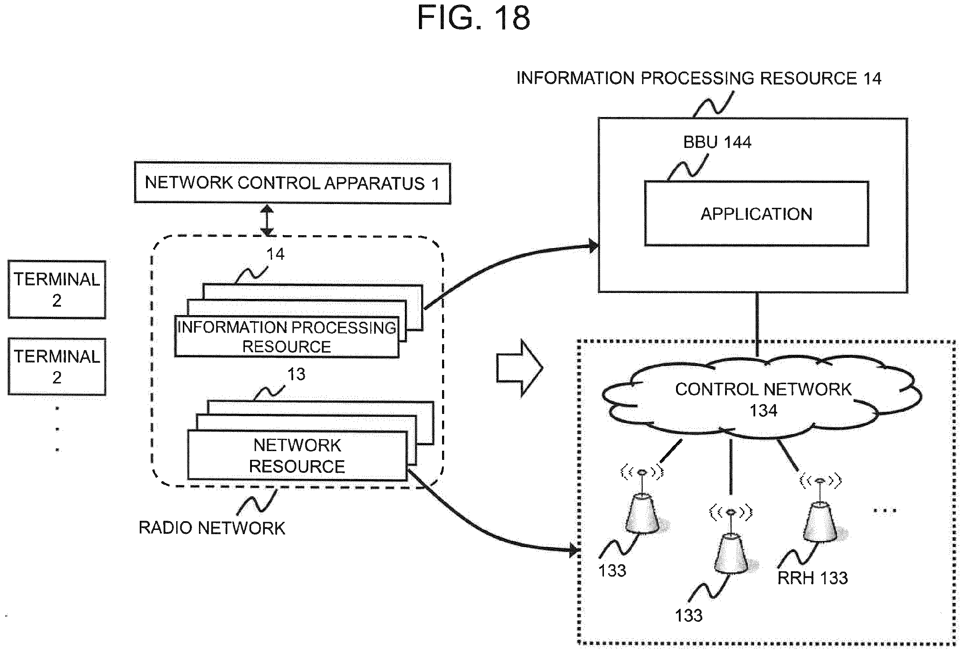

FIG. 18 shows an outline of the sixth exemplary embodiment. In the sixth exemplary embodiment, the network control apparatus 1 virtually constructs network functions provided by a radio base station by using network resources 13 and an information processing resource 14.

Referring to FIG. 18, the network control apparatus 1 virtually constructs a radio network including a BBU (Baseband Unit) 144, RRHs (Remote Radio Heads) 133, and a control network 134. For example, the BBU 144 and the RRHs 133 are physically separated in deployment.

For example, the network control apparatus 1 constructs the RRHs 133 and the control network 134 by using network resources 13 and constructs the BBU 144 by using an information processing resource 14. The information processing resource control section 12 of the network control apparatus 1 deploys an application having the function of BBU 144 in the information processing resource 14, thereby constructing the BBU 144.

A radio base station has a function of performing digital baseband signal processing and a function of performing analog radio frequency (RF) signal processing. In the sixth exemplary embodiment, these functions of a radio base station are separated into BBU 144 and RRH 133, respectively.

The BBU 144 is connected to an upper-level network (e.g., the core network of a carrier) and performs control and monitoring of radio base stations and digital baseband signal processing. The digital baseband signal processing includes Layer 2 signal processing and Layer 1 (physical layer) signal processing. The Layer 2 signal processing includes at least one of (i) data compression/decompression, (ii) data encryption, (iii) addition/deletion of a Layer 2 header, (iv) data segmentation/concatenation, and (v) composition/decomposition of a transfer format by multiplexing/demultiplexing data. In the case of E-UTRA as a specific example, the Layer 2 signal processing includes processing for Radio Link Control (RLC) and Media Access Control (MAC). The physical layer signal processing includes channel coding/decoding, modulation/demodulation, spreading/de-spreading, resource mapping, generation of OFDM symbol data (a baseband OFDM signal) through Inverse Fast Fourier Transform (IFFT), and the like.

The RRHs 133 are in charge of analog RF signal processing and provide mobile stations with air interface. The analog RF signal processing includes D/A conversion, A/D conversion, frequency up-conversion, frequency down-conversion, amplification, and the like.

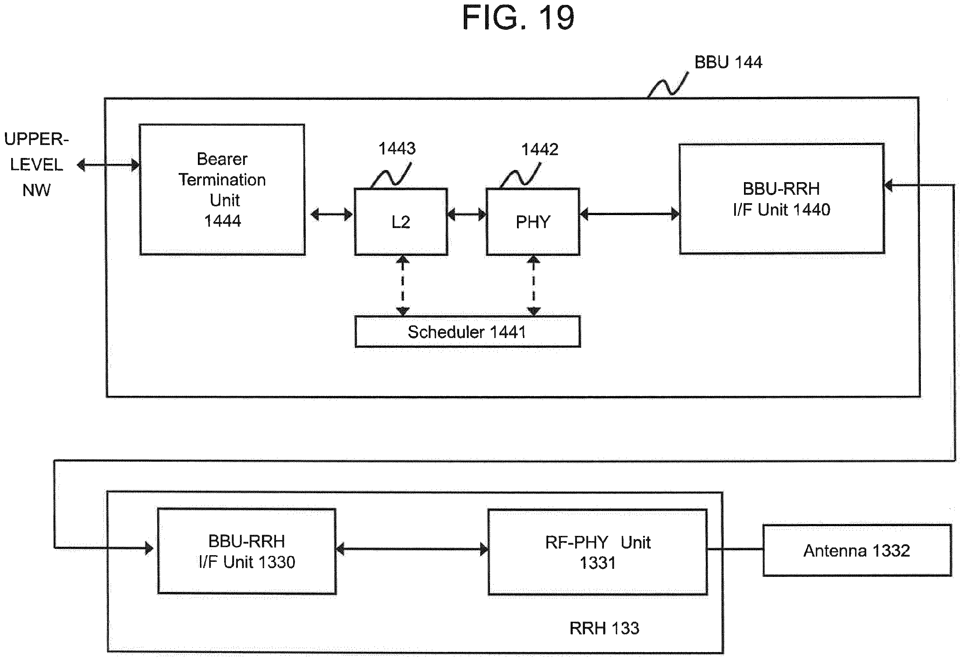

FIG. 19 shows an example of the configurations of the BBU 144 and the RRH 133. However, FIG. 19 shows by example, and the configurations of the BBU 144 and the RRH 133 are not limited to the example of FIG. 19.

A bearer termination unit 1444 terminates a bearer configured between itself and an upper-level network (e.g., UMTS RNC or E-UTRA EPC (Evolved Packet Core) to transfer user data. A bearer for transferring user data (e.g., EUTRA S1 bearer) is encrypted by using, for example, a tunneling protocol (e.g., IPsec). Moreover, a bearer is configured for each data flow (e.g., E-UTRA Packet Data Network (PDN) connection) between a mobile station and an external network. Accordingly, the bearer termination unit 1444 terminates at least one encrypted bearer, receives downlink user date for a plurality of mobile stations from the upper-level network, and sends uplink user data for a plurality of mobile stations to the upper-level network.

A scheduler 1441 dynamically allocates each of a plurality of downlink and uplink radio resources to mobile stations connected to the RRH 133 or their user data. The radio resources are differentiated on the basis of time, frequency or spreading code, or any combination thereof. For example, in the case of E-UTRA, a radio resource is a resource block, and dynamic scheduling is performed in minimum units of two resource blocks within one sub-frame (1 msec). One resource block has 12 subcarriers in frequency domain and seven OFDM symbols in time domain.

A PHY 1442 performs digital baseband signal processing related to physical layer. The signal processing by the PHY 1442 includes channel coding and modulation for sending downlink user data to the air interface. Moreover, the signal processing by the PHY 1442 includes demodulation and channel decoding for reconstructing uplink user data from a signal received via the air interface. The channel coding and decoding by the PHY 1442 include, for example, block coding or convolution coding, or any combination thereof. For example, the channel coding and decoding by the PHY 1442 are performed by using a coding algorithm such as turbo coding, Vitervi coding or Reed-Solomon coding. Moreover, the signal processing by the PHY 1442 may also include OFDM signal generation involving spreading/de-spreading, resource mapping, and Inverse Fast Fourier Transform (IFFT), depending on a communication scheme.

A L2 1443 has the bearer termination unit 1444 as its upper protocol layer and the PHY 1442 as its lower protocol layer and performs Layer 2 signal processing excluding dynamic scheduling. The Layer 2 signal processing includes at least one of (i) data compression/decompression, (ii) data encryption, (iii) addition/deletion of a Layer 2 header and data segmentation/concatenation, and (iv) composition/decomposition of a transfer format by multiplexing/demultiplexing data.

BBU-RRH I/F units 1440 and 1330 are the interface between the BBU 144 and the RRH 133.

A RF-PHY 1331 is connected to an antenna 1332 and performs analog RF signal processing related to physical layer. The signal processing performed by the RF-PHY 1331 includes D/A conversion, A/D conversion, frequency up-conversion, frequency down-conversion, amplification, and the like.

The network resource control section 11 of the network control apparatus 1 controls the network resources 13 to provide functions corresponding to a radio network. For example, the network resource control section 11 controls the network resources 13 by using the OpenFlow technology illustrated in FIGS. 9 to 11. For example, the network resource control section 11 selects a NW control module 151 for radio network from the SW repository 15 and, through this module, controls the network resources 13 so as to perform operations corresponding to the radio network.

### 6.2) Application example

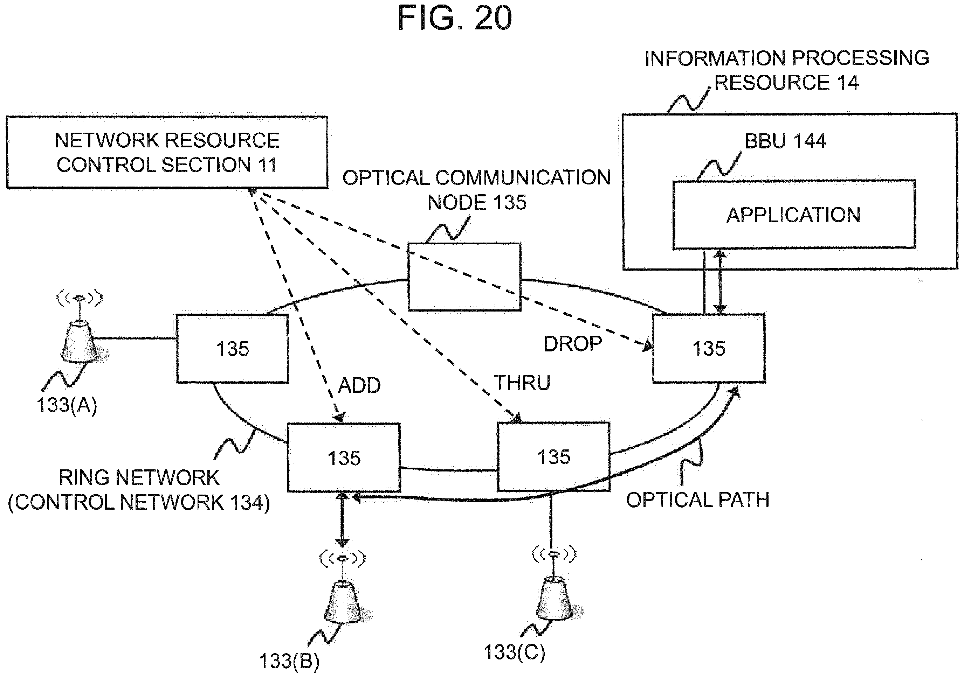

FIG. 20 shows an example of operations for the network resource control section 11 to control network resources 13. In the example of FIG. 20, each network resource 13 includes, for example, a RRH 133 and an optical communication node 135 for constructing a control network 134. The control network 134 is, for example, a ring network in which a plurality of optical communication nodes 135 are connected to each other in ring topology through optical fiber or the like.

The network resource control section 11 controls the network resources 13 in the control network 134 to establish a connection between the RRHs 133 and a BBU 144.

For example, the network resource control section 11 controls the optical communication nodes 135 by using ROADM (Reconfigurable Optical add/drop multiplexer). In a ROADM system, an optical path is established by branching/inserting an optical signal. An optical path means a path of an optical signal that occupies a single wavelength.

An example of establishing an optical path from a RRH 133(B) to the BBU 144 will be described with reference to FIG. 20.

The network resource control section 11 sets an operation rule in an optical communication node 135 connected to the RRH 133(B) such that the optical communication node 135 will "insert/ADD" an optical signal of a specific wavelength (a wavelength corresponding to the optical path to be established; e.g., wavelength X) sent from the RRH 133(B).

The network resource control section 11 sets an operation rule in each optical communication node 135 on the route of the optical path (an optical communication node 135 connected to a RRH 133(C) in the example of FIG. 20) such that the optical communication node 135 will allow the optical signal to "pass through/THRU" without inserting or branching any optical signal.

The network resource control section 11 sets an operation rule in an optical communication node 135 connected to the BBU 144 such that the optical communication node 135 will "branch/DROP" the optical signal of the wavelength X.

Through the above-described control, the network resource control section 11 establishes the optical path from the RRH 133(B) to the BBU 144. Other optical paths are established through a procedure similar to the above-described example of operations.

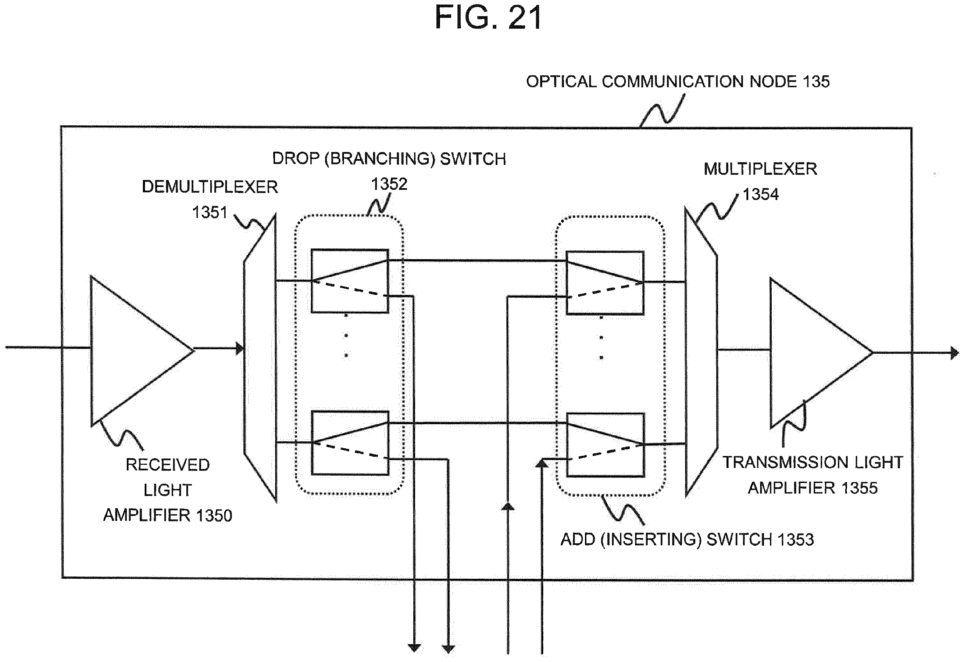

FIG. 21 shows an example of the configuration of an optical communication node 135.

A received light amplifier 1350 amplifies received light, and a demultiplexer 1351 demultiplexes the amplified received light into wavelength components.

Each of DROP (branching) switches 1352 switches its connection state between branching and pass-through of a demultiplexed optical signal of a corresponding one of wavelength components. The network resource control section 11 controls such that a switch 1352 corresponding to a wavelength to be branched will branch (DROP) a corresponding optical signal and another switch 1352 that does not branch a corresponding optical signal will pass its optical signal through to a corresponding ADD (inserting) switch 1353.

The respective ADD (inserting) switches 1353 are switches for inserting optical signals of respective wavelengths. The network resource control section 11 controls such that a switch 1353 corresponding to a wavelength to be inserted into the ring network will insert (ADD) an optical signal and another switch 1353 that does not insert a corresponding optical signal sends its optical signal received from the branching switch 1352 to a multiplexer 1354.

The multiplexer 1354 multiplexes the optical signals of respective wavelengths sent from the individual switches 1353, and a wavelength-multiplexed optical signal is amplified by a transmission light amplifier 1355.

The network control apparatus 1 allocates network resources 13 for virtually constructing a radio network. The network control apparatus 1 can acquire information concerning the communication quality of the radio network via RRHs 133 and BBUs 144 and, based on this information, can add or reduce a RRH 13 and a BBU 144.

For example, the network control apparatus 1, when identifying an area where radio communication quality is low (e.g., a coverage hole) based on information acquired, determines to newly initiate a RRH 133 deployed near this area. In order to cause an optical communication node 135 to establish an operation path of a wavelength corresponding to the RRH 133 to be initiated, the network resource control section 11 determines an identification criterion for identifying this optical path. The network resource control section 11 notifies the optical communication node 135 of an operation rule generated based on the identification criterion. In the example of FIG. 20, the RRH 133(B) is newly initiated. The network resource control section 11 notifies the node 135 connected to the RRH 133(B) of an operation rule to "ADD" an optical signal having the wavelength of the optical path between the RRH 133(B) and the BBU 144. The network resource control section 11 may determine a selection criterion for selecting a BBU 144 to establish an optical path between the BBU 144 and the initiated RRH 133, based on, for example, the load states of a plurality of BBUs 144. The network resource control section 11 notifies the nodes 135 of an operation rule determined based on the selection criterion.

The network control apparatus 1 may measure radio communication throughput at each RRH 133, based on information acquired. For example, the network control apparatus 1 identifies a RRH 133 that is providing a throughput not greater than a predetermined threshold, and determines to initiate a new RRH 133 deployed near that RRH 133. The network control apparatus 1 can improve the throughput by offloading communications by using the newly initiated RRH 133.

The network resource control section 11 of the network control apparatus 1 constructs the control network 134 by using newly allocated resources (e.g., RRHs 133). For example, the network resource control section 11 configures an optical path through the method illustrated in FIG. 20, thereby constructing the control network 134.

### 7. Seventh exemplary embodiment

A seventh exemplary embodiment of the present invention relates to a function in a core network of a mobile carrier. The seventh exemplary embodiment particularly shows an example in which a network function provided by a gateway device in a core network is virtually constructed.

### 7.1) Layout

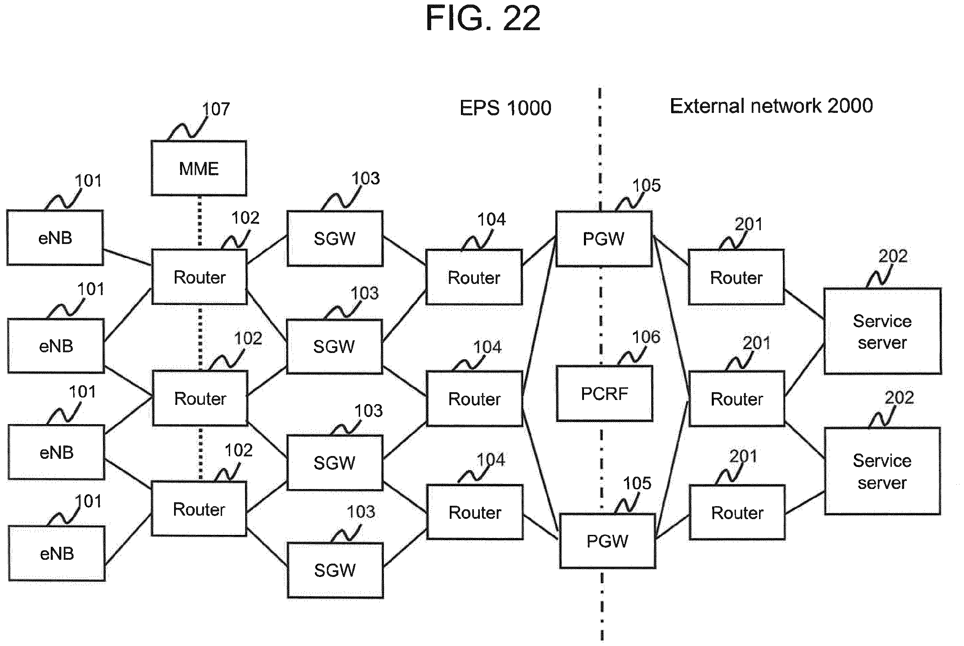

Referring to FIG. 22, a system structure according to the seventh exemplary embodiment will be described. FIG. 22 shows the layout of a communication network related to eUTRAN (evolved UTRAN) access, which is prescribed in 3GPP. The communication network includes an EPS (Evolved Packet System) 1000 and an external network 2000. The EPS 1000 includes eNBs 101, routers 102, SGWs 103, a MME 107, routers 104, PGWs 105, and a PCRF (Policy and Charging rules Function) 106. The external network 2000 includes routers 201 and service servers 202.

The routers 102 relay communications between the eNBs 101 and the SGWs 103.

The routers 104 relay communications between the SGWs 103 and the PGWs 105.

The SGWs 103 are logical nodes accommodating U-Plane (user traffic) of a system that is so called 3G system in 3GPP and of LTE system. The 3G system mainly uses the W-CDMA technology for its radio scheme. The SGWs 103 include a SGW that is virtually constructed by the network control apparatus 1 using an information processing resource 14.

The SGWs 103 transfers user traffic sent from radio terminals (UE: User Equipment) to the PGWs 105 via the routers 104. User traffic includes the IP address of any one of the plurality of PGWs 105 as a destination address. The routers 104 transfer the user traffic sent from the SGWs 103 to the PGWs 105 by using a routing table in which destination addresses are associated with transmission-destination devices.

The PGWs 105 are logical nodes having a function of interfacing between the EPS 1000 and the external network 2000. That is, data transmission and reception between the communication devices within the EPS 1000 and the communication devices within the external network 2000 and the like are performed via the PGWs 105. Among the PGWs 105, a PGW is included that is virtually constructed by the network control apparatus 1 using an information processing resource 14.

The MME 107 has a function of controlling paths at the routers 102, that is, a function of configuring communication paths between the eNBs 101 and the SGWs 103, as well as functions for mobility management, authentication (security control), and the like of terminals.

The PCRF 106 is a policy controller that determines policy control rules (such as QoS) and charging control rules to be applied to the PGWs 103 and the SGWs 105. The PGWs 103 and the SGWs 105 perform policy control and the like based on information notified from the PCRF 106.

Next, an example of the layout of the external network 2000 will be described. The routers 201 relay communications between the PGWs 105 and the service servers 202.

The service servers 202 receive data and provide services via the routers 201.

In the communication system according to the seventh exemplary embodiment, the gateways (SGWs 103 and PGWs 105) and the routers 102, 104 and 201 can be virtually constructed by using network resources 13 and information processing resources 14.

### 7.2) Virtual PGW

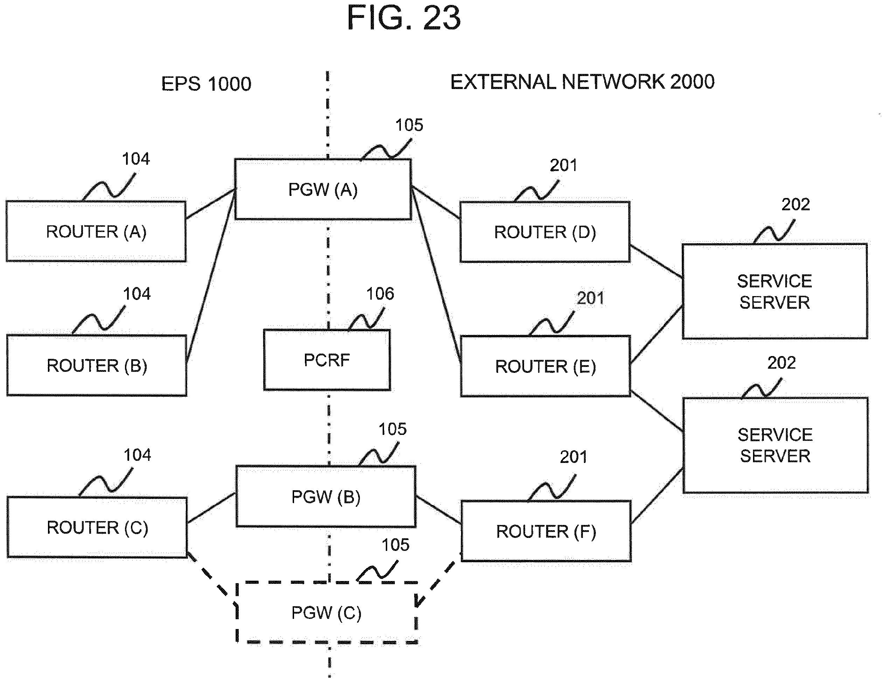

FIG. 23 shows an example of virtually constructing a PGW.

The information processing resource control section 12 of the network control apparatus 1 deploys an application having the function of PGW 105 in an information processing resource 14. The application deployed in the information processing resource 14 operates as a virtual PGW 105 (PGW (C) indicated by a broken line in FIG. 23).

For example, the information processing resource control section 12 can construct a new PGW 105 depending on the load states or congestion states of the PGWs 105, and also can construct an alternate PGW 105 in response to the occurrence of a failure to a PGW 105.

The network resource control section 11 of the network control apparatus 1 controls a network resource 13 so that it will provide a network function corresponding to a PGW 105 virtually constructed. For example, the network resource control section 11 controls a network resource 13 by using the OpenFlow technology illustrated in FIGS. 9 to 11, whereby a NW control module 151 for PGW is selected from the SW repository 15 and, through this module, the network resource 13 can be controlled so as to achieve operations corresponding to PGW.

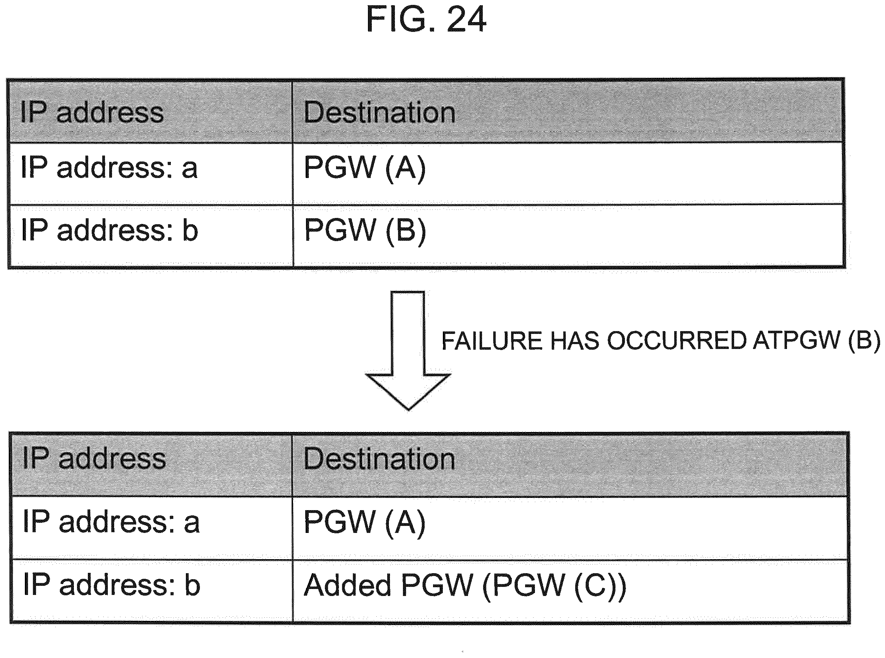

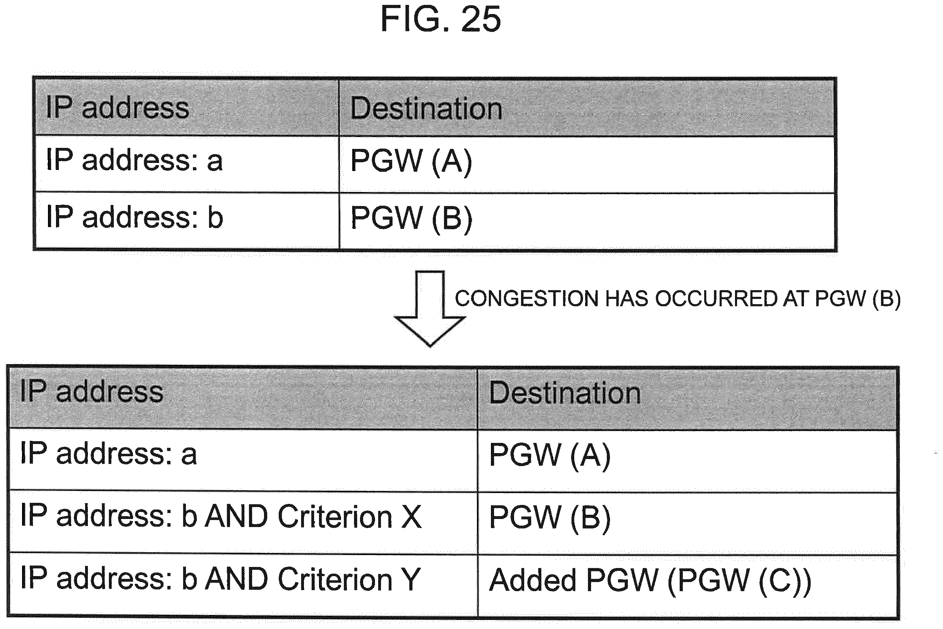

When the PGW (C) is added as illustrated in FIG. 23, the network resource control section 11 updates an operation rule in the routing table of a router 104 (router (C)), for example, as illustrated in FIG. 24 or 25.

FIG. 24 shows, as an example, how the routing table of the router (C) is updated when a failure occurs to the PGW (B). Here, assuming that the IP address of a PGW 105 (PGW (A)) is "a" and the IP address of a PGW 105 (PGW (B)) is "b", a case will be shown where traffic addressed to the PGW (B) is sent to the newly constructed PGW (C).

Referring to FIG. 24, it is assumed that an operation rule is registered in the routing table of the router 104 (router (C)), wherein the operation rule indicates that traffic is transferred to the PGW (A) when the destination of the traffic is "IP Address: a", and that traffic is transferred to the PGW (B) when its destination is "IP Address: b". When a failure occurs to the PGW (B), the network resource control section 11 updates this operation rule as follows. That is, the operation rule is updated such that traffic will be transferred to the PGW (A) as prior to the update when its destination is "IP Address: a", but traffic whose destination is "IP Address: b" will be transferred to an added PGW (C).

The network resource control section 11 also changes the routing table of a router 201 (router (F)) as in the example of FIG. 24. That is, the network resource control section 11 changes the routing table of the router (F) such that traffic addressed to the PGW (B) will be transferred to the newly constructed PGW (C).

Referring to FIG. 24, the network resource control section 11 can determine a criterion for identifying traffic, based on the destination address of traffic. Moreover, the network resource control section 11 can also determine a criterion for selecting a PGW 105 to be the traffic transfer destination, based on the operating states (e.g., the presence/absence of failure occurrence) of the PGWs 105. That is, the network resource control section 11 can determine a content of the routing table to be set in a router 104, based on the identification criterion and/or the selection criterion.

Moreover, the network resource control section 11 notifies the PGW (C) of bearer information, session information including control signal information, and the like that have been set in the PGW (B). Notification of the bearer information, session information and the like enables the PGW (C) to continue a communication even if a session is switched from the PGW (B) to the PGW (C).

FIG. 25 shows, as an example, how the routing table of the router (C) is updated when congestion occurs at the PGW (B). Here, assuming that the IP address of the PGW (A) is "a", the IP address of the PGW (B) is "b", and the IP address of the newly constructed PGW (C) is "c", a case will be shown where traffic addressed to the PGW (B) is distributed between the PGW (B) and the newly constructed PGW (C).

Referring to FIG. 25, it is assumed that an operation rule is registered in the routing table of a router 104 (router (C)), wherein the operation rule indicates that traffic is transferred to the PGW (A) when the destination of the traffic is "IP Address: a", and that traffic is transferred to the PGW (B) when its destination is "IP Address: b". When congestion occurs at the PGW (B), the network resource control section 11 updates this operation rule such that traffic to "IP Address: b" will be distributed between the PGW (B) and the PGW (C) based on additional criteria (criteria X and Y in the example of FIG. 25).

Referring to FIG. 25, the network resource control section 11 can determine a criterion for identifying traffic, based on the destination address of traffic. The network resource control section 11, in addition to the above-described selection criterion, can also use additional criteria to select a PGW to be the destination of traffic.

The additional criteria are, for example, criteria determined based on attribute information such as the IP address of a traffic-source user equipment, QoS (Quality of Service) information associated with a bearer between an eNodeB and a PGW, or a TEID (Tunnel Endpoint Identifier), which is the identifier of a bearer between an eNodeB and a PGW.

In the example of FIG. 25, the criteria X and Y are determined as follows. However, the under-mentioned criteria are shown as examples, and the present invention is not limited to the examples below.
(1) Criterion X: the end of a source IP address (e.g., the last digit "1" of 192.168.3.1) is an even number, Criterion Y: the end of a source IP address is an odd number.
(2) Criterion X: a TEID is an even number, Criterion Y: a TEID is an odd number.
(3) Criterion X: a QCI (QoS Class Identifier) associated with a bearer is in the range of 1-4, Criterion Y: a QCI associated with a bearer is in the range of 5-9.

In the examples above, the criteria X and Y are classification criteria for classifying attribute information based on the content of this information. However, the present invention is not limited to these.

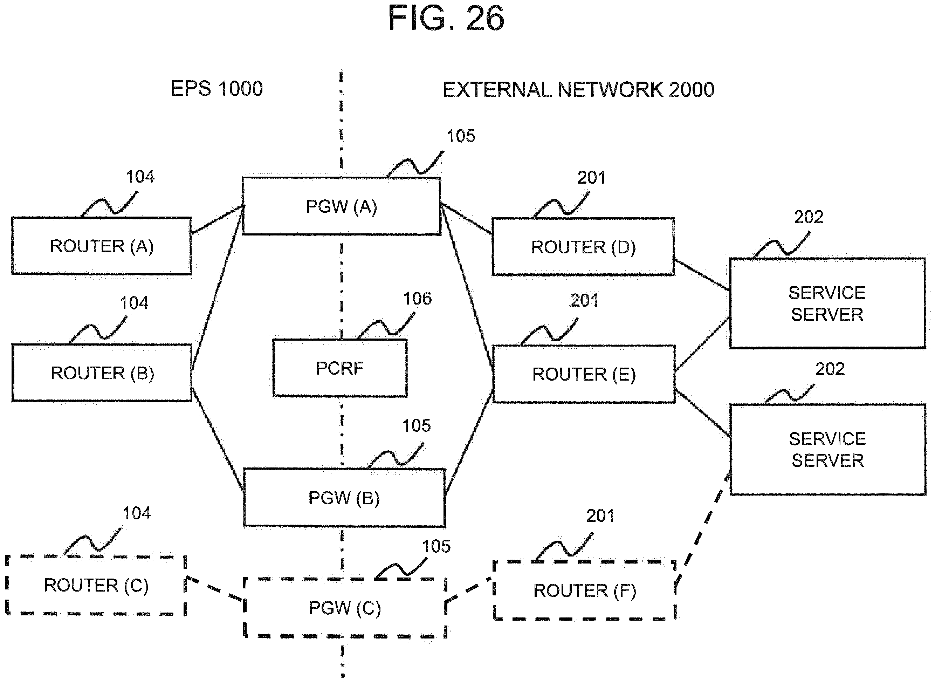

The network resource control section 11 may add a router 104 (router (C)) and a router 201 (router (F)) to the communication network by using network resources 13, in response to the setting-up of a new PGW 105 (PGW (C)), as in FIG. 26.

In the example of FIG. 26, for example, the network resource control section 11 assigns a new IP address (e.g., "IP Address: c") to the PGW (C). The network resource control section 11 notifies the newly added router (C) and router (F) of a rule to transfer traffic whose destination is "IP Address: c" to the PGW (C).

In the above-described example of operations, the network control apparatus 1 virtually constructs a PGW-related function. However, for example, it is also possible that functionality equivalent to the network control apparatus 1 is added to the PCRF 106 and the PCRF 106 virtually constructs a PGW-related function.

Moreover, for example, the PCRF 106 may have the function of the network resource control section 11 among the functions of the network control apparatus 1. 7.3) Virtual SGW

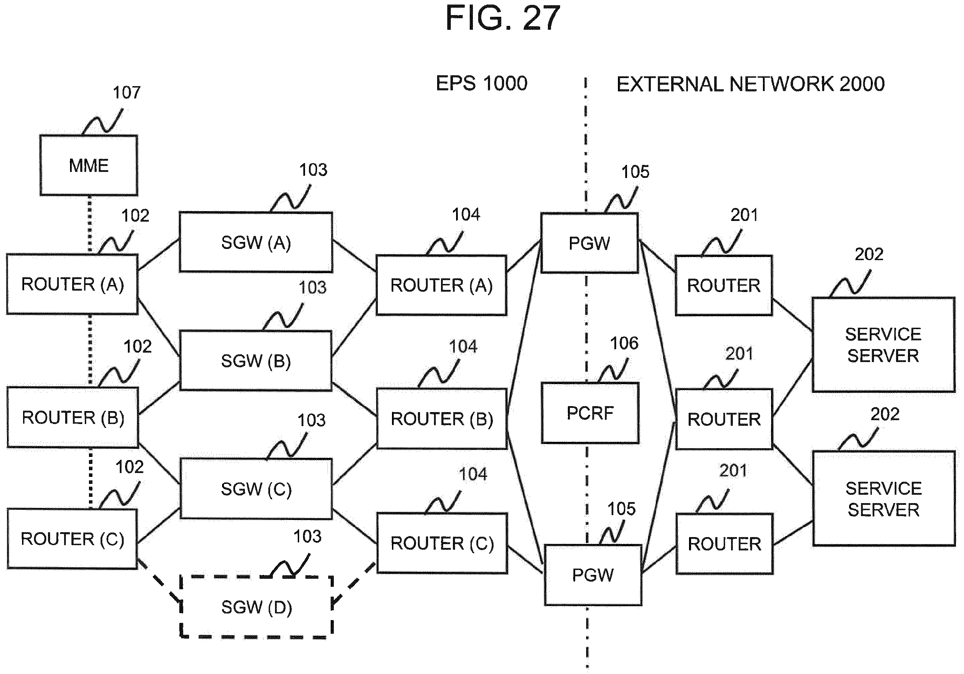

FIG. 27 shows an example in which the network control apparatus 1 virtually constructs the function of SGW 103.

The information processing resource control section 12 of the network control apparatus 1 deploys an application having the function of SGW 103 in an information processing resource 14.

For example, the information processing resource control section 12 constructs a new SGW 103 depending on the load states or congestion states of the SGWs 103. Moreover, the information processing resource control section 12 may construct an alternate SGW 103 in response to the occurrence of a failure to a SGW 103.

The network resource control section 11 of the network control apparatus 1 controls a network resource 13 so that it will provide a function corresponding to a SGW 103 virtually constructed. For example, the network resource control section 11 controls a network resource 13 by using the OpenFlow technology illustrated in FIGS. 9 to 11, whereby, for example, a NW control module 151 for SGW is selected from the SW repository 15 and, through this module, the network resource 13 can be controlled to achieve operations corresponding to SGW.

Operations for the network resource control section 11 to control a network resource 13 are similar to the operations illustrated in FIGS. 23 to 25. 7.4) Operations

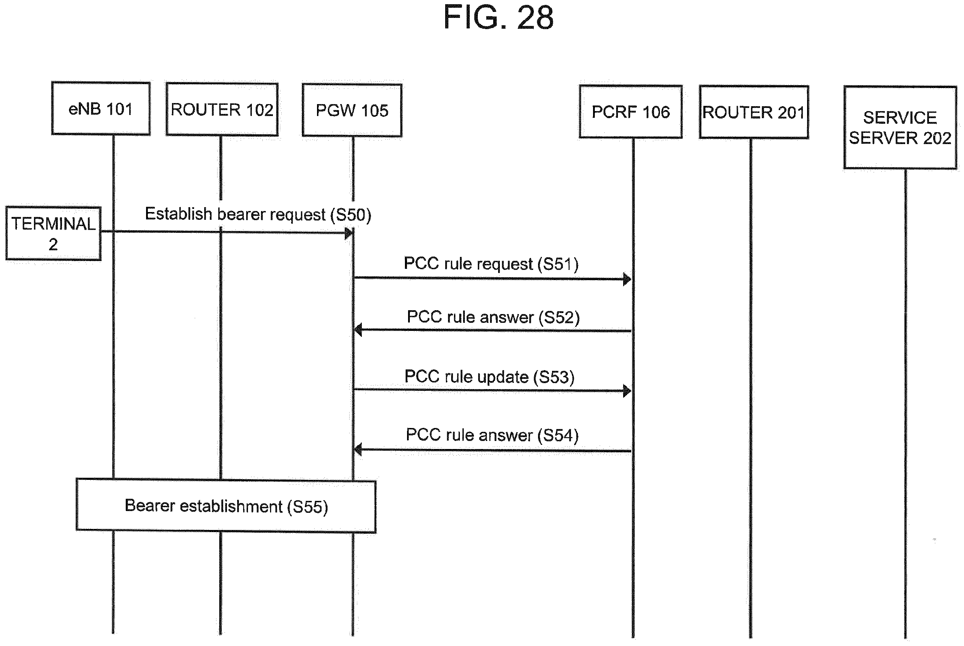

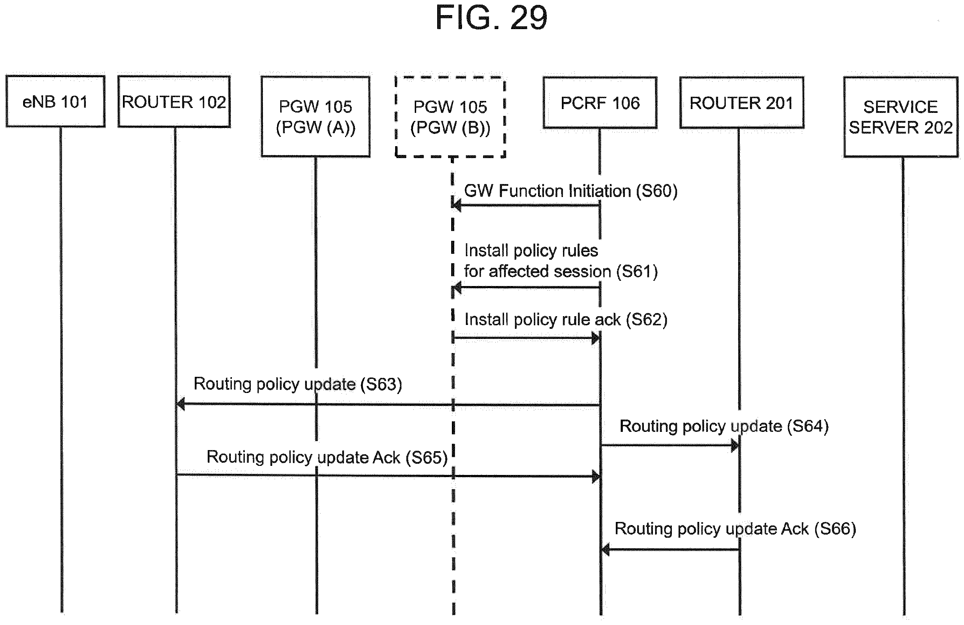

FIGS. 28 and 29 are sequence diagrams showing examples of operations in the seventh exemplary embodiment. However, FIGS. 28 and 29 show by example, and the present invention is not limited to these examples of operations.

FIG. 28 shows a sequence of bearer setup processing.

A terminal 2 sends "Establish bearer request" to a PGW 105 to establish a path between the terminal 2 and the PGW 105 (Operation S50).

The PGW 105 sends "PCC rule request" to the PCRF 106 to acquire policy information and the like (Operation S51). PCC is an abbreviation for Policy and Charging Control.

The PCRF 106 sends "PCC rule answer" to the PGW 105 to set a PPC rule in the PGW 105 (Operation S52).

The PGW 105 sends "PCC rule update" to the PCRF 106 to notify bearer information and control signal information corresponding to the PPC rule to be set in the PGW 105 (Operation S53). The PCC rule provides policy information such as a bandwidth, charging information and the like, which are set for each bearer. The bearer information includes, for example, an IP address to be assigned to the terminal 2, a TEID, a QoS parameter, and the like. Moreover, the control signal information includes, for example, the IP address to be assigned to the terminal 2, a TEID-C, a restart counter of the own node, a restart counter of a counterpart node, and the like. A TEID is an identifier for identifying a tunnel for user data transmission to be configured between a UE and a PGW 23. Moreover, a TEID-C is the identifier of a tunnel used on C-Plane.

The PCRF 106 records the bearer information, control signal information and the like that are set in the "PCC rule update".

The PCRF 106 sends "PCC rule answer" to the PGW 105 as a response signal to the "PCC rule update" (Operation S54). As a result of this operation, a bearer is established between the terminal 2 and the PGW 105 (Operation S55).

FIG. 29 shows an example of operations in a case of constructing a new PGW 105. In the example of FIG. 29, the PCRF 106 includes the functionality of the network control apparatus 1. Note that the network control apparatus 1 may perform the processing by the PCRF 106 in FIG. 29. In this case, for example, the network control apparatus 1 includes the functionality of the PCRF 106.

The PCRF 106 deploys an application having the function of PGW 105 in an information processing resource 14 and initiates a new PGW 105 (PGW (B)) (Operation S60).

The PGW (B) is initiated, and then at least part of sessions that have been established at a PGW (A) is switched to the PGW (B). The PCRF 106 notifies "Install all policy rules for affected session" to the PGW (B) so as to notify the PGW (B) of policy information on the session that is to be switched to the PGW (B) (Operation S61). The policy information includes session information. The session information includes a PCC rule, bearer information, control signal information, and the like.

The PGW (B) notifies "Install policy rule ack" to the PCRF 106 as a response signal to the "Install all policy rules for affected session" (Operation S62).

Operations S61 and S62 may be performed with respect to each terminal 2 that has established a bearer with the PGW 105, or may be performed in a collective manner by using a bulk message to transmit policy information with respect to a plurality of terminals 2 at once. The use of a bulk message makes it possible to reduce switching time, processing volumes, and processing loads in comparison with a case of sending a message with respect to each terminal.

The PCRF 106 sends "Routing policy update" to each router to update the routing tables of routers 102 and 201 (Operations S63 and S64). The PCRF 106 updates the routing tables, for example, as in the examples of FIGS. 24 and 25.

The routers 102 and 201 each send "Routing policy update ack" to the PCRF 106 (Operations S65 and S66).

The above-described example in the seventh exemplary embodiment can also be applied to structuring of a GGSN (Gateway GPRS Support Node) and a SGSN (Serving GPRS Support Node) in UTRAN communication systems.

### 8. Eighth exemplary embodiment

A network control apparatus 1 according to an eighth exemplary embodiment of the present invention has a function of cooperating with control apparatuses that control various types of networks (e.g., radio network, access network, core network, and the like).

The network control apparatus 1 manages various networks in a centralized manner, whereby it is possible to enhance the operational efficiency of operators. On the other hand, to mitigate an increase in the load on the network control apparatus 1 due to the centralization of the processing for controlling the networks, the network control apparatus 1 according to the present exemplary embodiment can delegate at least part of the function of virtually constructing the function of a dedicated appliance to a control apparatus deployed in each network. In this case, an operator constructs the function of a dedicated appliance through the network control apparatus 1, but actual processing is performed by the control apparatus deployed in each network. This configuration makes it possible to reduce the load on the network control apparatus 1 while maintaining the operational efficiency of operators.

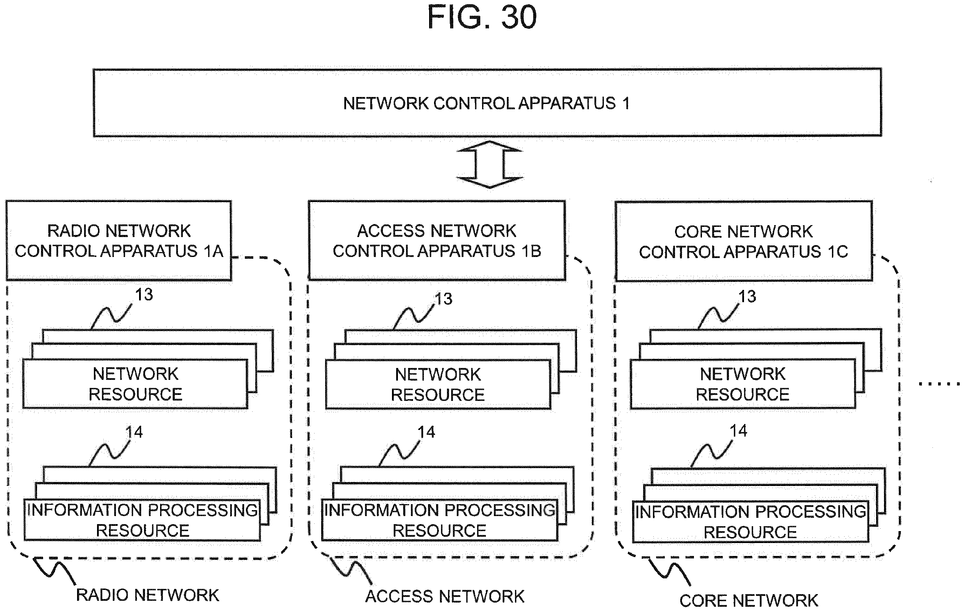

FIG. 30 shows an example of a system configuration according to the eighth exemplary embodiment of the present invention.

Each of networks (e.g., radio network, access network, core network, and the like) includes a control apparatus (e.g., 1A, 1B and 1C in FIG. 30) that can virtually construct the function of a dedicated appliance in the respective network. For example, each of the control apparatuses A1 to 1C includes functions similar to the network resource control section 11 and the information processing resource control section 12. The network resource control section 11 and the information processing resource control section 12 of each of the control apparatuses 1A to 1C can operate based on an instruction from the network control apparatus 1. The network control apparatus 1 operates as an upper-level controller of the control apparatuses 1A to 1C.

The network control apparatus 1 controlling the control apparatuses 1A to 1C has, for example, a configuration similar to those of the above-described other exemplary embodiments. Moreover, it is also possible that the network control apparatus 1 only has a function of integrated-controlling the control apparatuses 1A to 1C.

For example, each of the control apparatuses 1A to 1C has a function of virtually constructing the function of a dedicated appliance associated with the network it manages. The network control apparatus 1 instructs each of the control apparatuses 1A to 1C to construct the function of a dedicated appliance. Each of the control apparatuses 1A to 1C virtually constructs the function of the dedicated appliance in response to the instruction from the network control apparatus 1. The network resource control section 11 of each of the control apparatuses 1A to 1C controls operations of a network resource 13 in response to an instruction from the network control apparatus 1. For example, the network resource control section 11 of each of the control apparatuses 1A to 1C controls a network resource 13 by using a network control module 151 corresponding to the type of the function of a dedicated appliance in the respective networks of the control apparatuses 1A to 1C.

A management section 10 of the network control apparatus 1 has a function of integrated-controlling the control apparatuses 1A to 1C. For example, the management section 10 of the network control apparatus 1 collects information concerning the states of operations in each network (e.g., the state of deployment of information processing resources 14, topology information on network resources 13, and the like) via each of the control apparatuses 1A to 1C.

The control apparatuses 1A to 1C collect the states of operations in the respective networks they manage (e.g., the operating states of network resources 13 and information processing resources 14), for example, by using the technique shown in the above-described fourth exemplary embodiment. For example, respective management sections 10 of the control apparatuses 1A to 1C report the collected information to the network control apparatus 1. The network control apparatus 1 acquires the information collected by the control apparatuses 1A to 1C, refers to this information, and instructs each of the control apparatuses 1A to 1C to make an increase, a decrease or the like in resources. Each of the control apparatuses 1A to 1C, in response to the instruction from the network control apparatus 1, makes an increase or a decrease in at least one of network resource 13 and information processing resource 14.

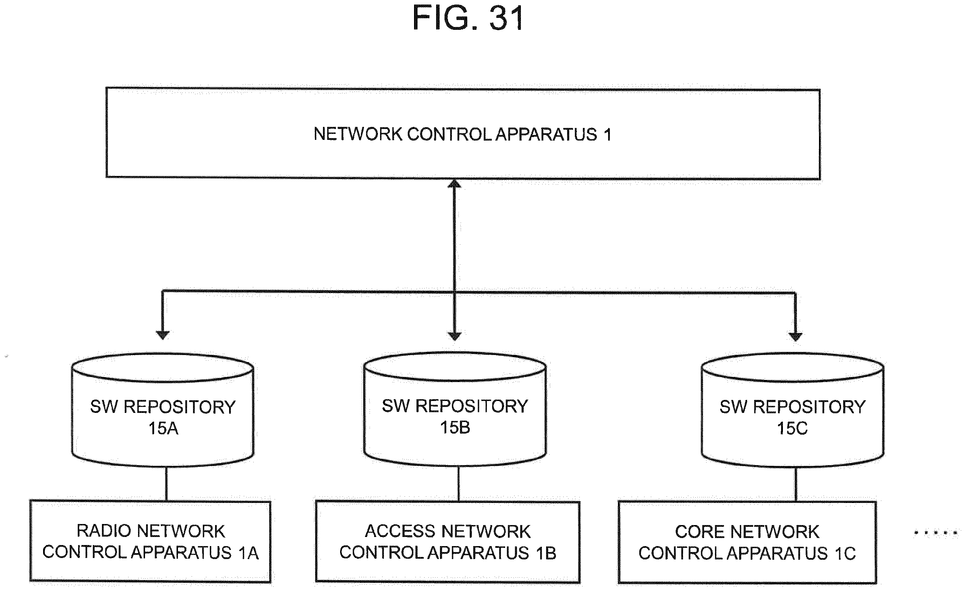

FIG. 31 shows another example of the configuration according to the eighth exemplary embodiment. This mode is an application of part of the configuration according to the above-described third exemplary embodiment to the eighth exemplary embodiment.

The control apparatuses 1A to 1C have SW repositories (15A to 15C), respectively. The network control apparatus 1 stores network function modules 150 and NW control modules 151 in each SW repository (15A to 15C). The network control apparatus 1 stores in each SW repository (15A to 15C) modules that can be used in each respective network. For example, the network control apparatus 1 stores modules that can be used for virtualization of a core network (e.g., modules for virtualizing a PGW, a SGW and the like) in the SW repository 15C of the control apparatus 1C.

The control apparatuses 1A to 1C each virtually construct the function of a dedicated appliance by using a module stored in the respective SW repositories.

Exemplary embodiments of the present invention have been described hereinabove, but the present invention is not limited to the above-described individual exemplary embodiments. The present invention can be implemented based on modification, replacement, and arrangement of each exemplary embodiment. Moreover, the present invention can also be implemented by arbitrarily combining each exemplary embodiment. That is, the present invention incorporates various modifications and amendments that can be accomplished based on all of the disclosed content and technical ideas of the present description.

### Reference Signs List

- 1: Network control apparatus
- 1A: Radio network control apparatus
- 1B: Access network control apparatus
- 1C: Core network control apparatus
- 10: Management section
- 100: OSS/BSS
- 11: Network resource control section
- 12: Information processing resource control section
- 13: Network resource
- 130: Rule database
- 131: Communication processing section
- 132: Switch
- 133: RRH
- 1330: BBU-RRH I/F unit
- 1331: RF-PHY unit
- 1332: Antenna
- 134: Control network
- 135: Optical communication node
- 1350: Received light amplifier
- 1351: Demultiplexer
- 1352: DROP (branching) switch
- 1353: ADD (inserting) switch
- 1354: Multiplexer
- 1355: Transmission light amplifier
- 14: Information processing resource
- 140: BRAS
- 141: Access control section
- 142: Session control section
- 143: Authentication device
- 144: BBU
- 1440: BBU-RRH I/F unit
- 1441: Scheduler
- 1442: PHY
- 1443: L2
- 1444: Bearer termination unit
- 15: SW repository
- 150: Network function module
- 151: NW control module
- 101: eNB
- 102: Router
- 103: SGW
- 104: Router
- 105: PGW
- 106: PCRF
- 107: MME
- 201: Router
- 202: Service Server
- 2: Terminal
- 3: Service provider

## Claims

1. A network control apparatus (1) for controlling a communication network which includes information processing resources (14) and network resources (13), by comprising:
first means (12) for deploying a virtual appliance in an information processing resource, wherein the virtual appliance is used to execute a function of a corresponding to a dedicated appliance; and
second means (12) for instructing a network resource to identify communication data to be processed by the virtual appliance and to transfer the identified communication data to the information processing resource in which the virtual appliance is deployed.

2. The network control apparatus according to claim 1, wherein the second means, depending on a type of the function of the corresponding dedicated appliance, is configured to determine an identification criterion for identifying communication data to be processed by the virtual appliance, and to indicate the determined identification criterion to the network resource.

3. The network control apparatus according to claim 1 or 2, wherein the second means is configured to determine a selection criterion for selecting a destination to which the communication data is transferred among a plurality of information processing resources in which the virtual appliance is deployed, and to indicate the determined selection criterion to the network resource.

4. The network control apparatus according to claim 1 or 2, wherein
the first means is configured to deploy the virtual appliance in each of a plurality of information processing resources, and
the second means is configured to determine a selection criterion for selecting a destination to which the communication data is transferred among the plurality of information processing resources, and to indicate the determined selection criterion to the network resource.

5. The network control apparatus according to any one of claims 1 to 4, wherein the second means is configured to select a control module corresponding to a functional type of the virtual appliance deployed in the information processing resource among a plurality of types of control modules, and to make an instruction to the network resource in accordance with the selected control module.

6. The network control apparatus according to any one of claims 1 to 5, comprising third means for changing an operating state of at least one of the information processing resource and the network resource, based on an operation state of the communication network.

7. The network control apparatus according to any one of claims 1 to 6, wherein
the first means is configured to deploy the virtual appliance in the information processing resource according to an instruction from an upper-level control apparatus, and
the second means is configured to control the network resource according to an instruction from the upper-level control apparatus.

8. The network control apparatus according to any one of claims 1 to 5, further comprising third means for changing an operating state of at least one of the information processing resource and the network resource according to an instruction from an upper-level control apparatus.

9. The network control apparatus according to any one of claims 1 to 8, further comprising a repository for storing control modules that are delivered from an upper-level control apparatus, based on a type of the communication network managed by the network control apparatus,
wherein the second means is configured to select from the repository a control module corresponding to a functional type of the virtual appliance deployed in the information processing resource, and to make an instruction to the network resource in accordance with the selected control module.

10. A network control method for controlling a communication network which includes information processing resources and network resources, comprising:
deploying a virtual appliance in an information processing resource, wherein the virtual appliance is used to execute a function of a corresponding dedicated appliance; and
instructing a network resource to identify communication data to be processed by the virtual appliance, and
instructing the network resource to transfer the identified communication data to the information processing resource in which the virtual appliance is deployed.

11. The network control method according to claim 10, comprising:
determining an identification criterion for identifying communication data to be processed by the virtual appliance, depending on a type of the function of the corresponding dedicated appliance; and
indicating the determined identification criterion to the network resource.

12. The network control method according to claim 10 or 11, comprising:
determining a selection criterion for selecting a destination to which the communication data is transferred among a plurality of information processing resources in which the virtual appliance is deployed; and
indicating the determined selection criterion to the network resource.

13. The network control method according to claim 10 or 11, comprising:
deploying the virtual appliance in each of a plurality of information processing resources;
determining a selection criterion for selecting a destination to which the identified communication data is transferred among the plurality of information processing resources; and
indicating the determined selection criterion to the network resource.

14. The network control method according to any one of claims 10 to 13, comprising:
selecting a control module corresponding to a functional type of the virtual appliance deployed in the information processing resource among a plurality of types of control modules; and
making an instruction to the network resource in accordance with the selected control module.

15. The network control method according to any one of claims 10 to 14, comprising:
changing an operating state of at least one of the information processing resource and the network resource, based on an operation state of the communication network.

16. The network control method according to any one of claims 10 to 15, comprising:
deploying the virtual appliance in the information processing resource according to an instruction from an upper-level control apparatus; and
controlling the network resource according to an instruction from the upper-level control apparatus.

17. The network control method according to any one of claims 10 to 14, wherein an operating state of at least one of the information processing resource and the network resource is allowed to be changed according to an instruction from an upper-level control apparatus.

18. The network control method according to any one of claims 10 to 17, comprising:
storing in a repository control modules delivered from an upper-level control apparatus based on a type of the communication network;
selecting from the repository a control module corresponding to a functional type of the virtual appliance deployed in the information processing resource; and
making an instruction to the network resource in accordance with the selected control module.

19. A program causing a network control apparatus for controlling a communication network which includes information processing resources and network resources, to execute the processing of:
deploying a virtual appliance in an information processing resource, wherein the virtual appliance is used to execute a function of a corresponding dedicated appliance; and
instructing a network resource to identify communication data to be processed by the virtual appliance and to transfer the identified communication data to the information processing resource in which the virtual appliance is deployed.

20. A communication system, comprising:
a data transfer apparatus that transfers communication data;
an information processing apparatus in which a virtual appliance is deployed that is capable of executing a function of a gateway apparatus relaying communications between communication networks; and
a control apparatus that instructs the data transfer apparatus to transfer communication data to be processed by the virtual appliance to the information processing apparatus.

## Patentansprüche

1. Netzwerksteuervorrichtung (1) zum Steuern eines Kommunikationsnetzwerks, die Informationsverarbeitungsressourcen (14) und Netzwerkressourcen (13) enthält, Folgendes umfassend:
erste Mittel (12) zum Bereitstellen einer virtuellen Anwendung in einer Informationsverarbeitungsressource, wobei die virtuelle Anwendung verwendet wird, um eine Funktion, die einer dedizierten Anwendung entspricht, Funktion auszuführen; und
zweite Mittel (12) zum Anweisen einer Netzwerkressource, um Kommunikationsdaten zu identifizieren, die von der virtuellen Anwendung verarbeitet werden sollen, und um die identifizierten Kommunikationsdaten an die Informationsverarbeitungsressource zu übertragen, in der die virtuelle Anwendung bereitgestellt ist.

2. Netzwerksteuervorrichtung nach Anspruch 1, wobei das zweite Mittel in Abhängigkeit von einem Funktionstyp der entsprechenden dedizierten Anwendung angepasst ist, ein Identifizierungskriterium zum Identifizieren von Kommunikationsdaten zu bestimmen, die von der virtuellen Anwendung verarbeitet werden, und um das bestimmte Identifizierungskriterium der Netzwerkressource anzuzeigen.

3. Netzwerksteuervorrichtung nach Anspruch 1 oder 2, wobei das zweite Mittel angepasst ist, ein Auswahlkriterium für das Auswählen eines Ziels zu bestimmen, an welches die Kommunikationsdaten zwischen mehreren Informationsverarbeitungsressourcen übertragen werden, in dem die virtuelle Anwendung bereitgestellt ist und um das bestimmte Auswahlkriterium der Netzwerkressource anzuzeigen.

4. Netzwerksteuervorrichtung nach Anspruch 1 oder 2, wobei das erste Mittel angepasst ist, um die virtuelle Anwendung in jedem von mehreren Informationsverarbeitungsressourcen bereitzustellen, und das zweite Mittel angepasst ist, um ein Auswahlkriterium zur Auswahl eines Ziels zu bestimmen, an welches die Kommunikationsdaten unter den mehreren Informationsverarbeitungsressourcen übertragen werden, und um das bestimmte Auswahlkriterium der Netzwerkressource anzuzeigen.

5. Netzwerksteuervorrichtung nach einem der Ansprüche 1 bis 4, wobei das zweite Mittel angepasst ist, ein Steuermodul auszuwählen, das einem funktionellen Typ der virtuellen Anwendung in der Informationsverarbeitungsressource unter mehreren Typen von Steuermodulen entspricht, und der Netzwerkressource gemäß dem ausgewählten Steuermodul eine Anweisung zu geben.

6. Netzwerksteuervorrichtung nach einem der Ansprüche 1 bis 5, umfassend ein drittes Mittel zum Ändern eines Betriebszustands von mindestens einer der Informationsverarbeitungsressource und der Netzwerkressource, basierend auf einem Betriebszustand des Kommunikationsnetzwerks.

7. Netzwerksteuervorrichtung nach einem der Ansprüche 1 bis 6, wobei das erste Mittel angepasst ist, die virtuelle Anwendung in der Informationsverarbeitungsressource entsprechend einer Anweisung von einer Steuervorrichtung der höheren Ebene bereitzustellen und das zweite Mittel zum Steuern der Netzwerkressource gemäß einer Anweisung von der Steuervorrichtung der höheren Ebene angepasst ist.

8. Netzwerksteuervorrichtung nach einem der Ansprüche 1 bis 5, weiterhin umfassend ein drittes Mittel zum Ändern eines Betriebszustands von mindestens einer der Informationsverarbeitungsressource und der Netzwerkressource gemäß einer Anweisung von einer Steuervorrichtung der höheren Ebene.

9. Netzwerksteuervorrichtung nach einem der Ansprüche 1 bis 8, die ferner einen Speicher zum Speichern von Steuermodulen umfasst, die von einer Steuervorrichtung der höheren Ebene geliefert werden, auf der Grundlage eines Typs des Kommunikationsnetzwerks, das durch die Netzwerksteuervorrichtung verwaltet wird, wobei das zweite Mittel so angepasst ist, dass es aus dem Speicher ein Steuermodul auswählt, das einem Funktionstyp der in der Informationsverarbeitungsressource eingesetzten virtuellen Anwendung entspricht, und eine Anweisung an die Netzwerkressource gemäß dem ausgewählten Steuermodul ausführt.

10. Netzwerksteuerverfahren zum Steuern eines Kommunikationsnetzwerks, das Informationsverarbeitungsressourcen und Netzwerkressourcen enthält, umfassend:
Bereitstellen einer virtuellen Anwendung in einer Informationsverarbeitungsressource, wobei die virtuelle Anwendung verwendet wird, um eine Funktion einer entsprechenden dedizierten Anwendung auszuführen; und
Anweisen einer Netzwerkressource, um Kommunikationsdaten zu identifizieren, die von der virtuellen Anwendung verarbeitet werden sollen, und Anweisen der Netzwerkressource, die identifizierten Kommunikationsdaten an die Informationsverarbeitungsressource zu übertragen, in der die virtuelle Anwendung bereitgestellt ist.

11. Netzwerksteuerverfahren nach Anspruch 10, umfassend:
Bestimmen eines Identifizierungskriteriums zum Identifizieren von Kommunikationsdaten, die von der virtuellen Anwendung zu verarbeiten sind, in Abhängigkeit von einem Funktionstyp der entsprechenden dedizierten Anwendung; und
Angeben des bestimmten Identifizierungskriteriums an die Netzwerkressource.

12. Netzwerksteuerverfahren nach Anspruch 10 oder 11, umfassend:
Bestimmen eines Auswahlkriteriums zum Auswählen eines Ziels, zu dem die Kommunikationsdaten übertragen werden, zwischen mehreren Informationsverarbeitungsressourcen, in denen die virtuelle Anwendung eingesetzt ist; und
Angeben des bestimmten Auswahlkriteriums an die Netzwerkressource.

13. Netzwerksteuerverfahren nach Anspruch 10 oder 11, umfassend:
Bereitstellen der virtuellen Anwendung in jeder von mehreren Informationsverarbeitungsressourcen;
Bestimmen eines Auswahlkriteriums zum Auswählen eines Ziels, an das die identifizierten Kommunikationsdaten zwischen den mehreren Informationsverarbeitungsressourcen übertragen werden; und
Angeben des bestimmten Auswahlkriteriums an die Netzwerkressource.

14. Netzwerksteuerverfahren nach einem der Ansprüche 13 bis 10, umfassend:
Auswählen eines Steuermoduls, das einem funktionalen Typ der in der Informationsverarbeitungsressource eingesetzten virtuellen Anwendung unter mehreren Typen von Steuermodulen entspricht; und
Erstellen einer Anweisung an die Netzwerkressource gemäß dem ausgewählten Steuermodul.

15. Netzwerksteuerverfahren nach einem der Ansprüche 14 bis 10, umfassend:
Ändern eines Betriebszustands von mindestens einer der Informationsverarbeitungsressource und der Netzwerkressource basierend auf einem Betriebszustand des Kommunikationsnetzwerks.

16. Netzwerksteuerverfahren nach einem der Ansprüche 10 bis 15, umfassend:
Bereitstellen der virtuellen Anwendung in der Informationsverarbeitungsressource nach einer Anweisung von einer Steuervorrichtung der höheren Ebene; und
Steuern der Netzwerkressource gemäß einer Anweisung von der Steuervorrichtung auf höherer Ebene.

17. Netzwerksteuerverfahren nach einem der Ansprüche 10 bis 14, wobei ein Betriebszustand von mindestens einer der Informationsverarbeitungsressource und der Netzwerkressource gemäß einer Anweisung von einer Steuervorrichtung der höheren Ebene geändert werden kann.

18. Netzwerksteuerverfahren nach einem der Ansprüche 10 bis 17, umfassend:
Speichern in einem Speicher von Steuermodulen, die von einer Steuervorrichtung der höheren Ebene geliefert werden, basierend auf einem Typ des Kommunikationsnetzwerks;
Auswählen eines Steuermoduls aus dem Speicher, das einem Funktionstyp der in der Informationsverarbeitungsressource eingesetzten virtuellen Anwendung entspricht; und
Erstellen einer Anweisung an die Netzwerkressource gemäß dem ausgewählten Steuermodul.

19. Programm, das eine Netzwerksteuervorrichtung zum Steuern eines Kommunikationsnetzwerkes, welches Informationsverarbeitungsressourcen und Netzwerkressourcen enthält, die Verarbeitung ausführen lässt:
Bereitstellen einer virtuellen Anwendung in einer Informationsverarbeitungsressource, wobei die virtuelle Anwendung verwendet wird, um eine Funktion einer entsprechenden dedizierten Anwendung auszuführen; und
Anweisen einer Netzwerkressource, Kommunikationsdaten, die von der virtuellen Anwendung verarbeitet werden sollen, zu identifizieren, und die identifizierten Kommunikationsdaten an die Informationsverarbeitungsressource zu übertragen, in welcher die virtuelle Anwendung bereitgestellt wird.

20. Kommunikationssystem, umfassend:
eine Datenübertragungsvorrichtung, die Kommunikationsdaten überträgt;
eine Informationsverarbeitungsvorrichtung, in der eine virtuelle Anwendung eingesetzt wird, die eine Funktion einer Gateway-Vorrichtung ausführen kann, die Kommunikationen zwischen Kommunikationsnetzwerken weiterleitet; und
eine Steuervorrichtung, welche die Datenübertragungsvorrichtung anweist, von der virtuellen Vorrichtung zu verarbeitende Kommunikationsdaten an die Informationsverarbeitungsvorrichtung zu übertragen.

## Revendications

1. Appareil de commande de réseau (1) pour commander un réseau de communication qui comporte des ressources de traitement d'informations (14) et des ressources de réseau (13), comprenant :
un premier moyen (12) pour déployer un dispositif virtuel dans une ressource de traitement d'informations, dans laquelle le dispositif virtuel est utilisé pour exécuter une fonction correspondant à un appareil dédié ; et
un second moyen (12) pour charger une ressource de réseau d'identifier les données de communication devant être traitées par le dispositif virtuel et de transférer les données de communication identifiées à la ressource de traitement d'informations dans laquelle le dispositif virtuel est utilisé.

2. Appareil de commande de réseau selon la revendication 1, dans lequel le second moyen, selon un type de fonction du dispositif dédié correspondant, est configuré afin de déterminer un critère d'identification pour identifier les données de communication devant être traitées par le dispositif virtuel et afin d'indiquer le critère d'identification déterminé à la ressource de réseau.

3. Appareil de commande de réseau selon la revendication 1 ou 2, dans lequel le second moyen est configuré afin de déterminer un critère de sélection pour sélectionner une destination vers laquelle les données de communication sont transférées parmi une pluralité de ressources de traitement d'informations dans lesquelles le dispositif virtuel est déployé et afin d'indiquer le critère de sélection déterminé à la ressource de réseau.

4. Appareil de commande de réseau selon la revendication 1 ou 2, dans lequel le premier moyen est configuré afin d'utiliser le dispositif virtuel dans chacune des pluralités de ressources de traitement d'informations, et le second moyen est configuré afin de déterminer un critère de sélection pour choisir une destination vers laquelle les données de communication sont transférées parmi la pluralité de ressources de traitement d'informations et afin d'indiquer le critère de sélection déterminé à la ressource de réseau.

5. Appareil de commande de réseau selon l'une quelconque des revendications 1 à 4, dans lequel le second moyen est configuré pour sélectionner un module de commande correspondant à un type fonctionnel du dispositif virtuel déployé dans la ressource de traitement d'informations parmi une pluralité de types de modules de commande et afin de donner une instruction à la ressource de réseau conformément au module de commande sélectionné.

6. Appareil de commande de réseau selon l'une quelconque des revendications 1 à 5, comprenant un troisième moyen permettant de changer un état de fonctionnement d'au moins une ressource de traitement d'informations et une ressource de réseau, en fonction d'un état de fonctionnement du réseau de communication.

7. Appareil de commande de réseau selon l'une quelconque des revendications 1 à 6, dans lequel le premier moyen est configuré pour déployer le dispositif virtuel dans la ressource de traitement d'informations conformément à une instruction provenant d'un appareil de commande de niveau supérieur, et le second moyen est configuré pour commander la ressource réseau selon une instruction provenant de l'appareil de commande de niveau supérieur.

8. Appareil de commande de réseau selon l'une quelconque des revendications 1 à 5, comprenant en outre un troisième moyen pour changer un état de fonctionnement d'au moins une ressource de traitement d'informations et une ressource de réseau selon une instruction provenant d'un appareil de commande de niveau supérieur.

9. Appareil de commande de réseau selon l'une quelconque des revendications 1 à 8 comprenant en outre un référentiel pour stocker des modules de commande qui sont délivrés à partir d'un appareil de commande de niveau supérieur, en fonction du type de réseau de communication géré par l'appareil de commande de réseau, dans lequel le second moyen est configuré afin de sélectionner dans le référentiel un module de commande correspondant à un type fonctionnel du dispositif virtuel utilisé dans la ressource de traitement d'informations et afin de donner une instruction à la ressource de réseau conformément au module de commande sélectionné.

10. Méthode de commande de réseau pour contrôler un réseau de communication qui comporte des ressources de traitement d'informations et des ressources de réseau, comprenant :
le déploiement d'un dispositif virtuel dans une ressource de traitement d'informations, dans laquelle le dispositif virtuel est utilisé pour exécuter une fonction d'un dispositif dédié correspondant ; et
l'obligation d'une ressource de réseau d'identifier les données de communication devant être traitées par le dispositif virtuel et de transférer les données de communication identifiées à la ressource de traitement d'informations dans laquelle le dispositif virtuel est déployé.

11. Méthode de commande de réseau selon la revendication 10, comprenant :
l'établissement d'un critère d'identification pour identifier les données de communication devant être traitées par le dispositif virtuel, selon un type de fonction du dispositif dédié correspondant ; et
l'indication du critère d'identification établi à la ressource de réseau.

12. Méthode de commande de réseau selon la revendication 10 ou 11, comprenant :
l'établissement d'un critère de sélection pour choisir une destination vers laquelle les données de communication sont transférées parmi une pluralité de ressources de traitement d'informations dans lesquelles le dispositif virtuel est déployé ; et
l'indication du critère de sélection établi à la ressource de réseau.

13. Méthode de commande de réseau selon la revendication 10 ou 11, comprenant :
le déploiement du dispositif virtuel dans chacune de la pluralité de ressources de traitement d'informations ;
l'établissement d'un critère de sélection pour choisir une destination vers laquelle les données de communication identifiées sont transférées parmi la pluralité de ressources de traitement d'informations ; et
l'indication du critère de sélection établi à la ressource de réseau.

14. Méthode de commande de réseau selon l'une quelconque des revendications 10 à 13, comprenant :
la sélection d'un module de commande correspondant à un type fonctionnel du dispositif virtuel utilisé dans la ressource de traitement d'informations parmi une pluralité de types de modules de commande ; et
la formulation d'une instruction à la ressource de réseau conformément au module de commande sélectionné.

15. Méthode de commande de réseau selon l'une quelconque des revendications 10 à 14, comprenant :
le changement d'un état de fonctionnement d'au moins une ressource de traitement d'informations et une ressource de réseau, en fonction d'un état de fonctionnement du réseau de communication.

16. Méthode de commande de réseau selon l'une quelconque des revendications 10 à 15, comprenant :
le déploiement du dispositif virtuel dans la ressource de traitement d'informations conformément à une instruction provenant d'un appareil de commande de niveau supérieur ; et
le contrôle de la ressource de réseau conformément à une instruction de l'appareil de commande de niveau supérieur.

17. Méthode de commande de réseau selon l'une quelconque des revendications 10 à 14, dans laquelle un état de fonctionnement d'au moins une ressource de traitement d'informations et une ressource de réseau peut être modifié conformément à une instruction provenant d'un appareil de commande de niveau supérieur.

18. Méthode de commande de réseau selon l'une quelconque des revendications 10 à 17, comprenant :
le stockage dans un référentiel des modules de commande délivrés à partir d'un appareil de commande de niveau supérieur selon un type du réseau de communication ;
la sélection dans le référentiel d'un module de commande correspondant à un type fonctionnel du dispositif virtuel déployé dans la ressource de traitement d'informations ; et
la formulation d'une instruction à la ressource de réseau conformément au module de commande sélectionné.

19. Programme permettant à un appareil de commande de réseau de contrôler un réseau de communication comprenant des ressources de traitement d'informations et des ressources de réseau, afin d'exécuter le traitement de :
le déploiement d'un dispositif virtuel dans une ressource de traitement d'informations, dans laquelle le dispositif virtuel est utilisé pour exécuter une fonction d'un dispositif dédié correspondant ; et
l'obligation d'une ressource réseau d'identifier les données de communication devant être traitées par le dispositif virtuel et de transférer les données de communication identifiées à la ressource de traitement d'informations dans laquelle le dispositif virtuel est déployé.

20. Système de communication, comprenant :
un appareil de transfert de données qui transfère des données de communication ;
un appareil de traitement d'informations dans lequel est utilisé un dispositif virtuel capable d'exécuter une fonction de passerelle relayant des communications entre des réseaux de communication ; et
un appareil de commande qui ordonne à l'appareil de transfert de données de transférer les données de communication devant être traitées par le dispositif virtuel vers l'appareil de traitement d'informations.
